# EUROPEAN PATENT APPLICATION

(11) **EP 4 815 588 A1**
(43) Date of publication of application: **30.09.2026**
(21) Application number: 23959291.8
(22) Date of filing: 24.11.2023
(51) Int. Cl.: H04W 68/00

(54) **PAGING METHOD, DEVICE, COMMUNICATION SYSTEM, COMMUNICATION DEVICE, AND STORAGE MEDIUM**

(71) Applicant: Beijing Xiaomi Mobile Software Co., Ltd., Beijing 100085 (CN)
(72) Inventor: ZHAO, Qun, Beijing 100085 (CN); FU, Ting, Beijing 100085 (CN); LI, Yanhua, Beijing 100085 (CN); XIAO, Kai, Beijing 100085 (CN)
(74) Representative: Stöckeler, Ferdinand
(86) International application number: PCT/CN2023/134160
(87) International publication number: WO 2025/107323

(57) **Abstract**

The present invention relates to the technical field of communications, and relates to a paging method, a device, a communication system, a communication device, and a storage medium. The method executed by a network device comprises: sending a first low-power wake-up signal (LP-WUS) to a terminal, wherein the first LP-WUS comprises wake-up information for instructing the terminal to wake up a main receiver (MR); determining a target paging occasion (PO) in a paging cycle on the basis of the first LP-WUS; and sending a paging message to the terminal on the target PO. The method executed by the terminal comprises: receiving the first LP-WUS sent by the network device, wherein the first LP-WUS comprises the wake-up information for instructing the terminal to wake up the MR; determining the target PO in the paging cycle on the basis of the first LP-WUS; and receiving on the target PO the paging message sent by the network device. The terminal is instructed by the LP-WUS to wake up the MR to receive the paging message, reducing the paging delay under the condition that the paging resource overhead is not increased, and achieving the objective of power saving of the terminal.

## Description

### TECHNICAL FIELD

The present disclosure relates to the field of communication technology, and specifically to a paging method and device, a communication system, a communication device and a storage medium.

### BACKGROUND

Paging is an important mechanism for a network to notify a terminal in an idle state that there is data to be waited for. Paging allows the network to notify the terminal that new data is available by sending a paging message to the terminal, which is important for improving battery life, network efficiency, network coverage, user experience, network congestion control, roaming and security.

### SUMMARY

Embodiments of the present disclosure provide a paging method and device, a communication system, a communication device, and a storage medium, which may be used in the field of communication technology to solve a technical problem of reducing a paging delay during transmission of paging information without increasing a paging resource overhead.

According to a first aspect of the embodiments of the present disclosure, a paging method is provided, which is performed by a network device, including: sending a first low power wake-up signal (LP-WUS) to a terminal, in which the first LP-WUS includes wake-up information for instructing the terminal to wake up a main radio (MR); determining a target paging occasion (PO) within a paging cycle based on the first LP-WUS; and sending a paging message to the terminal on the target PO.

According to a second aspect of the embodiments of the present disclosure, a paging method is provided, which is performed by a terminal, including: receiving a first low power wake-up signal (LP-WUS) sent by a network device, in which the first LP-WUS includes wake-up information for instructing the terminal to wake up a main radio (MR); determining a target paging occasion (PO) within a paging cycle based on the first LP-WUS; and receiving a paging message sent by the network device on the target PO.

According to a third aspect of the embodiments of the present disclosure, a network device is provided, including: a transceiver module and a processing module. The transceiver module is configured to send a first low power wake-up signal (LP-WUS) to a terminal, in which the first LP-WUS includes wake-up information for instructing the terminal to wake up a main radio (MR). The processing module is configured to determine a target paging occasion (PO) within a paging cycle based on the first LP-WUS. The transceiver module is configured to send a paging message to the terminal on the target PO.

According to a fourth aspect of the embodiments of the present disclosure, a terminal is provided, including: a transceiver module and a processing module. The transceiver module is configured to receive a first low power wake-up signal (LP-WUS) sent by a network device, in which the first LP-WUS includes wake-up information for instructing the terminal to wake up a main radio (MR). The processing module is configured to determine a target paging occasion (PO) within a paging cycle based on the first LP-WUS. The transceiver module is configured to receive a paging message sent by the network device on the target PO.

According to a fifth aspect of the embodiments of the present disclosure, a communication device is provided, including one or more processors; in which the one or more processors is(are) configured to call instructions to cause the communication device to perform the method described in any of the first aspect and the second aspect.

According to a sixth aspect of the embodiments of the present disclosure, a computer storage medium having computer-executable instructions stored thereon is provided. The computer executable instructions are executed by a processor, the communication method of any of the first aspect and the second aspect may be implemented.

According to a seventh aspect of the embodiments of the present disclosure, a communication system is provided, including a terminal and a network device. The network device is configured to perform the paging method described in the first aspect. The terminal is configured to perform the paging method described in the second aspect.

According to an eighth aspect of the embodiments of the present disclosure, a storage medium having instructions stored thereon is provided. When the instructions are running on a communication device, the communication device is caused to perform the paging method described in any of the first aspect and the second aspect.

According to the paging method provided in the present disclosure, the network device sends the first LP-WUS to the terminal, in which the first LP-WUS includes the wake-up information for instructing the terminal to wake up the MR; determines, based on the first LP-WUS, the target PO within the paging cycle; and sends the paging message to the terminal on the target PO. By instructing the terminal to wake up the MR to receive the paging message through the LP-WUS, a paging delay is reduced without increasing a paging resource overhead, thereby achieving the purpose of terminal power saving.

### BRIEF DESCRIPTION OF THE DRAWINGS

In order to more clearly illustrate technical solutions in the embodiments of the present disclosure, the drawings required for describing the embodiments are introduced below. The following drawings are only some embodiments of the present disclosure and do not impose specific limitations on the protection scope of the present disclosure.
FIG. 1 is a schematic diagram of a communication system according to an embodiment of the present disclosure;
FIG. 2 is an interactive diagram of a paging method according to an embodiment of the present disclosure;
FIG. 3A is a flowchart of a paging method performed by a network device according to an embodiment of the present disclosure;
FIG. 3B is a flowchart of a paging method performed by a network device according to an embodiment of the present disclosure;
FIG. 4A is a flowchart of a paging method performed by a terminal according to an embodiment of the present disclosure;
FIG. 4B is a flowchart of a paging method performed by a terminal according to an embodiment of the present disclosure;
FIG. 5 is an interactive diagram of a paging method according to an embodiment of the present disclosure;
FIG. 6A is a schematic diagram of determining a target PO according to an embodiment of the present disclosure;
FIG. 6B is a schematic diagram of determining a target PO according to an embodiment of the present disclosure;
FIG. 7A is a block diagram of a network device according to an embodiment of the present disclosure;
FIG. 7B is a block diagram of a terminal according to an embodiment of the present disclosure;
FIG. 8A is a block diagram of a communication device according to an embodiment of the present disclosure; and
FIG. 8B is a block diagram of a chip according to an embodiment of the present disclosure.

### DETAILED DESCRIPTION

Embodiments of the present disclosure provide a paging method and device, a communication system, a communication device and a storage medium.

According to a first aspect of the embodiments of the present disclosure, there is provided a paging method, which is performed by a network device, including: sending a first low power wake-up signal (LP-WUS) to a terminal, in which the first LP-WUS includes wake-up information for instructing the terminal to wake up a main radio (MR); determining a target paging occasion (PO) within a paging cycle based on the first LP-WUS; and sending a paging message to the terminal on the target PO.

In the above embodiments, the network device sends the first LP-WUS to the terminal to instruct the terminal to wake up the MR and determined the target PO for sending the paging message, so as to achieve the purpose of power saving.

In combination with some embodiments of the first aspect, in some embodiments, the method further includes: broadcasting paging configuration information to the terminal via system broadcasting, in which the paging configuration information includes the paging cycle, and the paging configuration information is used to determine a paging set, the paging set includes *N* paging frames (PFs) within the paging cycle, and each PF comprises *Nₛ* POs.

In combination with some embodiments of the first aspect, in some embodiments, the method further includes: determining, according to an identifier of the terminal, *N*, the paging cycle, and a radio frame offset, a PF where a legacy PO is located; determining the legacy PO according to the identifier of the terminal, *N*, and *Nₛ*; and sending the paging message to the terminal on the legacy PO.

In the above embodiments, before sending the LP-WUS, the legacy PO may be determined for the terminal via broadcasting, which is an optional solution. The paging message may be sent on the target PO or on the legacy PO.

In combination with some embodiments of the first aspect, in some embodiments, determining the target PO within the paging cycle based on the first LP-WUS comprises: determining a first delay based on the LP-WUS; determining a first timing, in which the first timing is associated with the LP-WUS; and determining a PO that meets a preset condition within the paging cycle as the target PO, in which the preset condition includes an interval between a second timing associated with the target PO and the first timing being greater than or equal to the first delay.

In the above embodiments, the first timing and the second timing are determined so that the interval between the first timing and the second timing meets the preset condition of the first delay, thereby determining the position of the target PO.

In combination with some embodiments of the first aspect, in some embodiments, the first delay includes at least one of: a time duration required for the terminal to wake up the MR; a time duration required for the terminal to complete time-frequency synchronization on the MR; a time duration between a paging early indication (PEI) configured via the system broadcasting and a PF/PO associated with the PEI; or a time duration for the terminal to prepare to monitor the paging message.

In combination with some embodiments of the first aspect, in some embodiments, the first timing is any one of: an end time point of a last symbol of a channel of the first LP-WUS; an end time point of a last time slot of the first LP-WUS; an end time point of a last sub-frame of the first LP-WUS; an end time point of a last radio frame of the first LP-WUS; an end time point of a last symbol of a channel of a second LP-WUS, in which the second LP-WUS is a last LP-WUS in an LP-WUS cycle where the first LP-WUS is located; an end time point of a last time slot of a second LP-WUS; an end time point of a last sub-frame of a second LP-WUS; an end time point of a last radio frame of a second LP-WUS; or an end time point of an LP-WUS cycle where the first LP-WUS is located.

In combination with some embodiments of the first aspect, in some embodiments, determining the PO that meets the preset condition within the paging cycle as the target PO includes: determining a first PO as the target PO, in which the first PO is a first one of POs after the first delay.

In combination with some embodiments of the first aspect, in some embodiments, the second timing includes any one of a start time point of a first symbol of the first PO; a start time point of a first time slot of the first PO; a start time point of a first sub-frame of the first PO; or a start time point of a first radio frame of the first PO.

In combination with some embodiments of the first aspect, in some embodiments, determining the PO that meets the preset condition within the paging cycle as the target PO includes: determining a first PF, in which the first PF is a first one of PFs after the first delay; and determining the target PO from the first PF.

In combination with some embodiments of the first aspect, in some embodiments, the second timing is a start time point of the first PF.

In combination with some embodiments of the first aspect, in some embodiments, determining the target PO from the first PF includes any one of: determining the target PO according to a number of POs included in the first PF and an identifier of the terminal; determining a first one of POs in the first PF as the target PO; or determining the target PO from the first PF according to a bit position, in the first LP-WUS, of the wake-up information for instructing the terminal to wake up the MR.

In combination with some embodiments of the first aspect, in some embodiments, determining the target PO according to the bit position, in the first LP-WUS, of the wake-up information for instructing the terminal to wake up the MR includes: determining, according to the bit position and a number of a plurality of paging subgroups included in each PO within the paging cycle, a PO where the bit position is located in the first PF; and determining the PO as the target PO.

In combination with some embodiments of the first aspect, in some embodiments, determining the PO that meets the preset condition within the paging cycle as the target PO includes: determining a second PO as the target PO, in which the second PO is one PO among first *n* POs after the first delay, $2 \leq n \leq \left⌊N⋅{N}_{s}⋅{T}_{lpwus}/T\right⌋$, where *T_{lpwus}* is an LP-WUS cycle, *T* is the paging cycle, *N* is a number of PFs comprised in the paging cycle, *Nₛ* is a number of POs comprised in each PF.

In combination with some embodiments of the first aspect, in some embodiments, the second timing is any one of: a start time point of a first symbol of a first one of the first *n* POs; a start time point of a first time slot of a first one of the first *n* POs; a start time point of a first sub-frame of a first one of the first *n* POs; or a start time point of a first radio frame of a first one of the first *n* POs.

In combination with some embodiments of the first aspect, in some embodiments, the second PO is any one of: a first one of the first *n* POs; a PO determined from the first *n* POs according to *n* and an identifier of the terminal; or a PO determined from the first *n* POs according to a bit position, in the first LP-WUS, of the wake-up information for instructing the terminal to wake up the MR, and a number of a plurality of paging subgroups included in each PO within the paging cycle.

In combination with some embodiments of the first aspect, in some embodiments, determining the PO that meets the preset condition within the paging cycle as the target PO includes: determining the target PO from first *m* PFs after the first delay, $2 \leq m \leq \left⌊N⋅{T}_{lpwus}/T\right⌋$, where *T_{lpwus}* is an LP-WUS cycle, *T* is the paging cycle, *N* is a number of PFs comprised in the paging cycle.

In combination with some embodiments of the first aspect, in some embodiments, the second timing is a start time point of a first one of the first *m* PFs.

In combination with some embodiments of the first aspect, in some embodiments, determining the target PO from the first *m* PFs after the first delay includes any one of: determining a second PF, in which the second PF is a first one of the first *m* PFs after the first delay, or the second PF is a PF determined from the first *m* PFs according to *m* and an identifier of the terminal; and determining the target PO from the second PF according to a number of POs included in the second PF, the number of PFs included in the paging cycle, and the identifier of the terminal; or determining, according to the bit position, in the first LP-WUS, of the wake-up information for instructing the terminal to wake up the MR, and a number of a plurality of paging subgroups included in each PO within the paging cycle, a PO where the bit position is located in the first *m* PFs as the target PO.

In combination with some embodiments of the first aspect, in some embodiments, determining the PO that meets the preset condition within the paging cycle as the target PO includes: determining the target PO from a first PF group, in which the first LP-WUS is associated with the first PF group, the first PF group is a first one of PF groups after the first delay, the paging cycle includes *N*/*P* PF groups, and each PF group includes *P* PFs.

In combination with some embodiments of the first aspect, in some embodiments, the second timing is a start time point of a first one of PFs in the first PF group.

In combination with some embodiments of the first aspect, in some embodiments, determining the target PO from the first PF group includes any one of: determining a third PF, in which the third PF is a first one of PFs in the first PF group, or the third PF is a PF determined from the first PF group according to *P* and an identifier of the terminal; and determining the target PO from the third PF according to a number of POs included in the third PF, a number of PFs included in the paging cycle, and the identifier of the terminal; or determining the target PO from the *P* PFs in the first PF group according to *P*, a number of POs included in each PF and the identifier of the terminal.

In combination with some embodiments of the first aspect, in some embodiments, determining the PO that meets the preset condition within the paging cycle as the target PO includes: determining the target PO from Q PFs after the first delay, in which an LP-WUS cycle where the first LP-WUS is located includes M LP-WUSs, and the M LP-WUSs are associated with *Q* PFs in the paging set, *Q* = *N · T_{lpwus}*/*T*, where *T_{lpwus}* is the LP-WUS cycle, and *T* is the paging cycle; or determining the target PO from a first one of PF groups after the first delay, in which the paging cycle includes *N*/*Q* PF groups, and each PF group includes *Q* PFs.

In combination with some embodiments of the first aspect, in some embodiments, the first timing is any one of: an end time point of a last symbol of a channel of a second LP-WUS, in which the second LP-WUS is a last LP-WUS in the LP-WUS cycle where the first LP-WUS is located; an end time point of a last time slot of a second LP-WUS; an end time point of a last sub-frame of a second LP-WUS; an end time point of a last radio frame of a second LP-WUS; or an end time point of the LP-WUS cycle where the first LP-WUS is located.

In combination with some embodiments of the first aspect, in some embodiments, the second timing is a start time point of a first one of the Q PFs after the first delay.

In the above embodiments, the first LP-WUS is one LP-WUS in the LP-WUS cycle, and the first timing is set as the end time point of the last LP-WUS in the cycle where the first LP-WUS is located. The target PO is a PO in the *Q* PFs after the first delay or a PO in the first one of PF groups.

In combination with some embodiments of the first aspect, in some embodiments, determining the target PO from the *Q* PFs after the first delay includes any one of: determining the target PO from the *Q* PFs after the first delay according to at least one of an index of the first LP-WUS in the LP-WUS cycle, *Q,* M or *Nₛ*; or determining a fourth PF from the *Q* PFs after the first delay according to an index of the first LP-WUS in the LP-WUS cycle, *Q* and M, and determining the target PO from the fourth PF according to an identifier of the terminal, *N* and *Nₛ*, in which for any one of the M LP-WUSs, a PO associated with said any one LP-WUS is one PO in the *Q* PFs, a plurality of POs in the same PF are associated with different LP-WUSs, and one or more terminals configured with the same LP-WUS is(are) associated with the same PO in the *Q* PFs.

In combination with some embodiments of the first aspect, in some embodiments, determining the target PO from the *Q* PFs after the first delay includes any one of: determining a fifth PF from the *Q* PFs after the first delay according to an index of the first LP-WUS in the LP-WUS cycle, *Q* and M, and determining the target PO from the fifth PF according to an identifier of the terminal, *N* and *Nₛ*; or determining the target PO from the *Q* PFs after the first delay according to a bit position, in the first LP-WUS, of the wake-up information for instructing the terminal to wake up the MR, and a number of a plurality of paging subgroups included in each PO within the paging cycle; in which for any one of the M LP-WUSs, a PO associated with said any one LP-WUS belongs to a plurality of POs in one PF among the *Q* PFs, and one or more terminals configured with the same LP-WUS is(are) associated with the same PF among the *Q* PFs.

In combination with some embodiments of the first aspect, in some embodiments, determining the target PO from the Q PFs after the first delay includes any one of: determining an index of a starting PO in the *Q* PFs according to an index of the first LP-WUS in the LP-WUS cycle, *Q,* M and *Nₛ*, and determining the target PO according to the index of the starting PO, *Q* and *Nₛ*; or determining the target PO from the *Q* PFs according to a bit position, in the first LP-WUS, of the wake-up information for instructing the terminal to wake up the MR, and a number of a plurality of paging subgroups included in each PO within the paging cycle; in which for any one of the M LP-WUSs, a PO associated with said any one LP-WUS belongs to *x* POs in the *Q* PFs, 1 ≤ *x* ≤ *Q · Nₛ.*

In combination with some embodiments of the first aspect, in some embodiments, determining the target PO from the *Q* PFs after the first delay includes any one of: determining an index of a starting PF among the *Q* PFs according to an index of the first LP-WUS in the LP-WUS cycle, *Q* and M, determining indices of *y* PFs among the *Q* PFs according to the index of the starting PF and *Q*, and determining the target PO from the *y* PFs according to an identifier of the terminal, *N* and *Nₛ*; or determining the target PO from the *Q* PFs according to a bit position, in the first LP-WUS, of the wake-up information for instructing the terminal to wake up the MR, and a number of a plurality of paging subgroups included in each PO within the paging cycle; in which for any one of the M LP-WUSs, a PF associated with said any one LP-WUS belongs to the *y* PFs among the *Q* PFs, 1 ≤ *y* ≤ *Q.*

In combination with some embodiments of the first aspect, in some embodiments, determining the PO that meets the preset condition within the paging cycle as the target PO includes: determining the target PO from a first PF group after the first delay; in which the M LP-WUSs are associated with the first PF group, the first PF group is a first one of PF groups after the first delay, the paging cycle includes *N*/*P* PF groups, and each PF group includes *P* PFs.

In combination with some embodiments of the first aspect, in some embodiments, the first timing is any one of: an end time point of a last symbol of a channel of a second LP-WUS, in which the second LP-WUS is a last LP-WUS in an LP-WUS cycle where the first LP-WUS is located; an end time point of a last time slot of a second LP-WUS; an end time point of a last sub-frame of a second LP-WUS; an end time point of a last radio frame of a second LP-WUS; or an end time point of an LP-WUS cycle where the first LP-WUS is located.

In combination with some embodiments of the first aspect, in some embodiments, the second timing is a start time point of a first one of PFs in the first PF group.

In combination with some embodiments of the first aspect, in some embodiments, determining the target PO from the first PF group after the first delay includes any one of: determining a sixth PF in the first PF group according to *P* and an identifier of the terminal, and determining the target PO from the sixth PF according to *Nₛ*, *N,* and the identifier of the terminal; determining a seventh PF in the first PF group according to a modulo operation on *P* and an identifier of the terminal, and determining the target PO from the seventh PF according to *Nₛ*, *P* and the identifier of the terminal; determining the target PO from the *P* PFs in the first PF group according to *P*, *Nₛ* and an identifier of the terminal; determining a starting PF among the *P* PFs according to *P* and a number of LP-WUSs included in an LP-WUS cycle, and determining the target PO from the starting PF according to *Nₛ*, *N* and an identifier of the terminal; or determining the target PO from the *P* PFs according to a bit position, in the first LP-WUS, of the wake-up information for instructing the terminal to wake up the MR, and a number of a plurality of paging subgroups included in each PO within the paging cycle.

In combination with some embodiments of the first aspect, in some embodiments, determining the PO that meets the preset condition within the paging cycle as the target PO includes: determining the target PO from a first short cycle, in which the paging cycle includes K short cycles, each short cycle includes W PFs, W=N/K, the first LP-WUS is associated with a PF or a PO in the first short cycle, and the first short cycle is a first one of short cycles after the first delay.

In combination with some embodiments of the first aspect, in some embodiments, the second timing is any one of: a start time point of a first symbol of a first PO, in which the first PO is a first one of POs after the first delay; a start time point of a first time slot of a first PO; a start time point of a first sub-frame of a first PO; a start time point of a first radio frame of a first PO; a start time point of a first PF, in which the first PF is a first one of PFs after the first delay; a start time point of a first symbol of a PEI associated with a first PF; a start time point of a first time slot of a PEI associated with a first PF; a start time point of a first sub-frame of a PEI associated with a first PF; a start time point of a first radio frame of a PEI associated with a first PF; a start time point of a short paging cycle where a first PO is located; or a start time point of a short paging cycle where a first PF is located.

In combination with some embodiments of the first aspect, in some embodiments, determining the target PO from the first short cycle includes: determining an index of an eighth PF in the first short cycle according to W and an identifier of the terminal, in which the eighth PF is a PF associated with the first LP-WUS in the first short cycle; and determining the target PO from the eighth PF; or determining the target PO in the first short cycle according to W, an identifier of the terminal and *Nₛ*.

In the above embodiments, based on the LP-WUS, the target PO is determined according to the above different solutions, which may reduce a paging delay and achieve the purpose of terminal power saving.

According to a second aspect of the embodiments of the present disclosure, there is provided a paging method, which is performed by a terminal, including: receiving a first low power wake-up signal (LP-WUS) sent by a network device, in which the first LP-WUS includes wake-up information for instructing the terminal to wake up a main radio (MR); determining a target paging occasion (PO) within a paging cycle based on the first LP-WUS; and receiving a paging message sent by the network device on the target PO.

In the above embodiments, the network device sends the first LP-WUS to the terminal to instruct the terminal to wake up the MR and determined the target PO for sending the paging message, so as to achieve the purpose of power saving.

In combination with some embodiments of the second aspect, in some embodiments, the method further includes: broadcasting paging configuration information to the terminal via system broadcasting, in which the paging configuration information includes the paging cycle, and the paging configuration information is used to determine a paging set, the paging set includes *N* paging frames (PFs) within the paging cycle, and each PF comprises *Nₛ* POs.

In combination with some embodiments of the second aspect, in some embodiments, the method further includes: determining, according to an identifier of the terminal, *N*, the paging cycle, and a radio frame offset, a PF where a legacy PO is located; determining the legacy PO according to the identifier of the terminal, *N*, and *Nₛ*; and sending the paging message to the terminal on the legacy PO.

In the above embodiments, before sending the LP-WUS, the legacy PO may be determined for the terminal via broadcasting, which is an optional solution. The paging message may be sent on the target PO or on the legacy PO.

In combination with some embodiments of the second aspect, in some embodiments, determining the target PO within the paging cycle based on the first LP-WUS comprises: determining a first delay based on the LP-WUS; determining a first timing, in which the first timing is associated with the LP-WUS; and determining a PO that meets a preset condition within the paging cycle as the target PO, in which the preset condition includes an interval between a second timing associated with the target PO and the first timing being greater than or equal to the first delay.

In the above embodiments, the first timing and the second timing are determined so that the interval between the first timing and the second timing meets the preset condition of the first delay, thereby determining the position of the target PO.

In combination with some embodiments of the second aspect, in some embodiments, the first delay includes at least one of: a time duration required for the terminal to wake up the MR; a time duration required for the terminal to complete time-frequency synchronization on the MR; a time duration between a paging early indication (PEI) configured via the system broadcasting and a PF/PO associated with the PEI; or a time duration for the terminal to prepare to monitor the paging message.

In combination with some embodiments of the second aspect, in some embodiments, the first timing is any one of: an end time point of a last symbol of a channel of the first LP-WUS; an end time point of a last time slot of the first LP-WUS; an end time point of a last sub-frame of the first LP-WUS; an end time point of a last radio frame of the first LP-WUS; an end time point of a last symbol of a channel of a second LP-WUS, in which the second LP-WUS is a last LP-WUS in an LP-WUS cycle where the first LP-WUS is located; an end time point of a last time slot of a second LP-WUS; an end time point of a last sub-frame of a second LP-WUS; an end time point of a last radio frame of a second LP-WUS; or an end time point of an LP-WUS cycle where the first LP-WUS is located.

In combination with some embodiments of the second aspect, in some embodiments, determining the PO that meets the preset condition within the paging cycle as the target PO includes: determining a first PO as the target PO, in which the first PO is a first one of POs after the first delay.

In combination with some embodiments of the second aspect, in some embodiments, the second timing includes any one of: a start time point of a first symbol of the first PO; a start time point of a first time slot of the first PO; a start time point of a first sub-frame of the first PO; or a start time point of a first radio frame of the first PO.

In combination with some embodiments of the second aspect, in some embodiments, determining the PO that meets the preset condition within the paging cycle as the target PO includes: determining a first PF, in which the first PF is a first one of PFs after the first delay; and determining the target PO from the first PF.

In combination with some embodiments of the second aspect, in some embodiments, the second timing is a start time point of the first PF.

In combination with some embodiments of the second aspect, in some embodiments, determining the target PO from the first PF includes any one of: determining the target PO according to a number of POs included in the first PF and an identifier of the terminal; determining a first one of POs in the first PF as the target PO; or determining the target PO from the first PF according to a bit position, in the first LP-WUS, of the wake-up information for instructing the terminal to wake up the MR.

In combination with some embodiments of the second aspect, in some embodiments, determining the target PO according to the bit position, in the first LP-WUS, of the wake-up information for instructing the terminal to wake up the MR includes: determining, according to the bit position and a number of a plurality of paging subgroups included in each PO within the paging cycle, a PO where the bit position is located in the first PF; and determining the PO as the target PO.

In combination with some embodiments of the second aspect, in some embodiments, determining the PO that meets the preset condition within the paging cycle as the target PO includes: determining a second PO as the target PO, in which the second PO is one PO among first *n* POs after the first delay, $2 \leq n \leq \left⌊N⋅{N}_{s}⋅{T}_{lpwus}/T\right⌋$, where *T_{lpwus}* is an LP-WUS cycle, *T* is the paging cycle, *N* is a number of PFs comprised in the paging cycle, *Nₛ* is a number of POs comprised in each PF.

In combination with some embodiments of the second aspect, in some embodiments, the second timing is any one of: a start time point of a first symbol of a first one of the first *n* POs; a start time point of a first time slot of a first one of the first *n* POs; a start time point of a first sub-frame of a first one of the first *n* POs; or a start time point of a first radio frame of a first one of the first *n* POs.

In combination with some embodiments of the second aspect, in some embodiments, the second PO is any one of: a first one of the first *n* POs; a PO determined from the first *n* POs according to *n* and an identifier of the terminal; or a PO determined from the first *n* POs according to a bit position, in the first LP-WUS, of the wake-up information for instructing the terminal to wake up the MR, and a number of a plurality of paging subgroups included in each PO within the paging cycle.

In combination with some embodiments of the second aspect, in some embodiments, determining the PO that meets the preset condition within the paging cycle as the target PO includes: determining the target PO from first *m* PFs after the first delay, $2 \leq m \leq \left⌊N⋅{T}_{lpwus}/T\right⌋$, where *T_{lpwus}* is an LP-WUS cycle, *T* is the paging cycle, *N* is a number of PFs comprised in the paging cycle.

In combination with some embodiments of the second aspect, in some embodiments, the second timing is a start time point of a first one of the first *m* PFs.

In combination with some embodiments of the second aspect, in some embodiments, determining the target PO from the first *m* PFs after the first delay includes any one of: determining a second PF, in which the second PF is a first one of the first *m* PFs after the first delay, or the second PF is a PF determined from the first *m* PFs according to *m* and an identifier of the terminal; and determining the target PO from the second PF according to a number of POs included in the second PF, the number of PFs included in the paging cycle, and the identifier of the terminal; or determining, according to the bit position, in the first LP-WUS, of the wake-up information for instructing the terminal to wake up the MR, and a number of a plurality of paging subgroups included in each PO within the paging cycle, a PO where the bit position is located in the first *m* PFs as the target PO.

In combination with some embodiments of the second aspect, in some embodiments, determining the PO that meets the preset condition within the paging cycle as the target PO includes: determining the target PO from a first PF group, in which the first LP-WUS is associated with the first PF group, the first PF group is a first one of PF groups after the first delay, the paging cycle includes *N*/*P* PF groups, and each PF group includes P PFs.

In combination with some embodiments of the second aspect, in some embodiments, the second timing is a start time point of a first one of PFs in the first PF group.

In combination with some embodiments of the second aspect, in some embodiments, determining the target PO from the first PF group includes any one of: determining a third PF, in which the third PF is a first one of PFs in the first PF group, or the third PF is a PF determined from the first PF group according to P and an identifier of the terminal; and determining the target PO from the third PF according to a number of POs included in the third PF, a number of PFs included in the paging cycle, and the identifier of the terminal; or determining the target PO from the *P* PFs in the first PF group according to *P,* a number of POs included in each PF and the identifier of the terminal.

In combination with some embodiments of the second aspect, in some embodiments, determining the PO that meets the preset condition within the paging cycle as the target PO includes: determining the target PO from Q PFs after the first delay, in which an LP-WUS cycle where the first LP-WUS is located includes M LP-WUSs, and the M LP-WUSs are associated with *Q* PFs in the paging set, *Q* = *N · T_{lpwus}*/*T*, where *T_{lpwus}* is the LP-WUS cycle, and *T* is the paging cycle; or in which *N*/*Q* PF groups, and each PF group includes *Q* PFs.

In combination with some embodiments of the second aspect, in some embodiments, the first timing is any one of: an end time point of a last symbol of a channel of a second LP-WUS, in which the second LP-WUS is a last LP-WUS in the LP-WUS cycle where the first LP-WUS is located; an end time point of a last time slot of a second LP-WUS; an end time point of a last sub-frame of a second LP-WUS; an end time point of a last radio frame of a second LP-WUS; or an end time point of the LP-WUS cycle where the first LP-WUS is located.

In combination with some embodiments of the second aspect, in some embodiments, the second timing is a start time point of a first one of the Q PFs after the first delay.

In the above embodiments, the first LP-WUS is one LP-WUS in the LP-WUS cycle, and the first timing is set as the end time point of the last LP-WUS in the cycle where the first LP-WUS is located. The target PO is a PO in the *Q* PFs after the first delay or a PO in the first one of PF groups.

In combination with some embodiments of the second aspect, in some embodiments, determining the target PO from the Q PFs after the first delay includes any one of: determining the target PO from the *Q* PFs after the first delay according to at least one of an index of the first LP-WUS in the LP-WUS cycle, *Q,* M or *Nₛ*; or determining a fourth PF from the *Q* PFs after the first delay according to an index of the first LP-WUS in the LP-WUS cycle, *Q* and M, and determining the target PO from the fourth PF according to an identifier of the terminal, *N* and *Nₛ*, in which for any one of the M LP-WUSs, a PO associated with said any one LP-WUS is one PO in the *Q* PFs, a plurality of POs in the same PF are associated with different LP-WUSs, and one or more terminals configured with the same LP-WUS is(are) associated with the same PO in the *Q* PFs.

In combination with some embodiments of the second aspect, in some embodiments, determining the target PO from the *Q* PFs after the first delay includes any one of: determining a fifth PF from the *Q* PFs after the first delay according to an index of the first LP-WUS in the LP-WUS cycle, *Q* and M, and determining the target PO from the fifth PF according to an identifier of the terminal, *N* and *Nₛ*; or determining the target PO from the *Q* PFs after the first delay according to a bit position, in the first LP-WUS, of the wake-up information for instructing the terminal to wake up the MR, and a number of a plurality of paging subgroups included in each PO within the paging cycle; in which for any one of the M LP-WUSs, a PO associated with said any one LP-WUS belongs to a plurality of POs in one PF among the *Q* PFs, and one or more terminals configured with the same LP-WUS is(are) associated with the same PF among the *Q* PFs.

In combination with some embodiments of the second aspect, in some embodiments, determining the target PO from the *Q* PFs after the first delay includes any one of: determining an index of a starting PO in the *Q* PFs according to an index of the first LP-WUS in the LP-WUS cycle, *Q,* M and *Nₛ*, and determining the target PO according to the index of the starting PO, *Q* and *Nₛ*; or determining the target PO from the *Q* PFs according to a bit position, in the first LP-WUS, of the wake-up information for instructing the terminal to wake up the MR, and a number of a plurality of paging subgroups included in each PO within the paging cycle; in which for any one of the M LP-WUSs, a PO associated with said any one LP-WUS belongs to *x* POs in the *Q* PFs, 1 ≤ *x* ≤ *Q · Nₛ.*

In combination with some embodiments of the second aspect, in some embodiments, determining the target PO from the *Q* PFs after the first delay includes any one of: determining an index of a starting PF among the *Q* PFs according to an index of the first LP-WUS in the LP-WUS cycle, *Q* and M, determining indices of *y* PFs among the *Q* PFs according to the index of the starting PF and *Q,* and determining the target PO from the *y* PFs according to an identifier of the terminal, *N* and *Nₛ*; or determining the target PO from the *Q* PFs according to a bit position, in the first LP-WUS, of the wake-up information for instructing the terminal to wake up the MR, and a number of a plurality of paging subgroups included in each PO within the paging cycle; in which for any one of the M LP-WUSs, a PF associated with said any one LP-WUS belongs to the *y* PFs among the *Q* PFs, 1 ≤ *y* ≤ *Q.*

In combination with some embodiments of the second aspect, in some embodiments, determining the PO that meets the preset condition within the paging cycle as the target PO includes: determining the target PO from a first PF group after the first delay; in which the M LP-WUSs are associated with the first PF group, the first PF group is a first one of PF groups after the first delay, the paging cycle includes *N*/*P* PF groups, and each PF group includes *P* PFs.

In combination with some embodiments of the second aspect, in some embodiments, the first timing is any one of: an end time point of a last symbol of a channel of a second LP-WUS, in which the second LP-WUS is a last LP-WUS in an LP-WUS cycle where the first LP-WUS is located; an end time point of a last time slot of a second LP-WUS; an end time point of a last sub-frame of a second LP-WUS; an end time point of a last radio frame of a second LP-WUS; or an end time point of an LP-WUS cycle where the first LP-WUS is located.

In combination with some embodiments of the second aspect, in some embodiments, the second timing is a start time point of a first one of PFs in the first PF group.

In combination with some embodiments of the second aspect, in some embodiments, determining the target PO from the first PF group after the first delay includes any one of: determining a sixth PF in the first PF group according to *P* and an identifier of the terminal, and determining the target PO from the sixth PF according to *Nₛ*, *N,* and the identifier of the terminal; determining a seventh PF in the first PF group according to a modulo operation on *P* and an identifier of the terminal, and determining the target PO from the seventh PF according to *Nₛ*, *P* and the identifier of the terminal; determining the target PO from the *P* PFs in the first PF group according to *P, Nₛ* and an identifier of the terminal; determining a starting PF among the *P* PFs according to *P* and a number of LP-WUSs included in an LP-WUS cycle, and determining the target PO from the starting PF according to *Nₛ*, *N* and an identifier of the terminal; or determining the target PO from the P PFs according to a bit position, in the first LP-WUS, of the wake-up information for instructing the terminal to wake up the MR, and a number of a plurality of paging subgroups included in each PO within the paging cycle.

In combination with some embodiments of the second aspect, in some embodiments, determining the PO that meets the preset condition within the paging cycle as the target PO includes: determining the target PO from a first short cycle, in which the paging cycle includes K short cycles, each short cycle includes W PFs, W=N/K, the first LP-WUS is associated with a PF or a PO in the first short cycle, and the first short cycle is a first one of short cycles after the first delay.

In combination with some embodiments of the second aspect, in some embodiments, the second timing is any one of: a start time point of a first symbol of a first PO, in which the first PO is a first one of POs after the first delay; a start time point of a first time slot of a first PO; a start time point of a first sub-frame of a first PO; a start time point of a first radio frame of a first PO; a start time point of a first PF, in which the first PF is a first one of PFs after the first delay; a start time point of a first symbol of a PEI associated with a first PF; a start time point of a first time slot of a PEI associated with a first PF; a start time point of a first sub-frame of a PEI associated with a first PF; a start time point of a first radio frame of a PEI associated with a first PF; a start time point of a short paging cycle where a first PO is located; or a start time point of a short paging cycle where a first PF is located.

In combination with some embodiments of the second aspect, in some embodiments, determining the target PO from the first short cycle includes: determining an index of an eighth PF in the first short cycle according to W and an identifier of the terminal, in which the eighth PF is a PF associated with the first LP-WUS in the first short cycle; and determining the target PO from the eighth PF; or determining the target PO in the first short cycle according to W, an identifier of the terminal and *Nₛ*.

In the above embodiments, based on the LP-WUS, the target PO is determined according to the above different solutions, which may reduce a paging delay and achieve the purpose of terminal power saving.

According to a third aspect of the embodiments of the present disclosure, a network device is provided, including: a transceiver module and a processing module. The transceiver module is configured to send a first low power wake-up signal (LP-WUS) to a terminal, in which the first LP-WUS includes wake-up information for instructing the terminal to wake up a main radio (MR). The processing module is configured to determine a target paging occasion (PO) within a paging cycle based on the first LP-WUS. The transceiver module is configured to send a paging message to the terminal on the target PO.

According to a fourth aspect of the embodiments of the present disclosure, a terminal is provided, including: a transceiver module and a processing module. The transceiver module is configured to receive a first low power wake-up signal (LP-WUS) sent by a network device, in which the first LP-WUS includes wake-up information for instructing the terminal to wake up a main radio (MR). The processing module is configured to determine a target paging occasion (PO) within a paging cycle based on the first LP-WUS. The transceiver module is configured to receive a paging message sent by the network device on the target PO.

According to a fifth aspect of the embodiments of the present disclosure, a communication device is provided, including: one or more processors. The one or more processors is(are) configured to call instructions to cause the communication device to perform the method described in any of the first aspect and the second aspect.

According to a sixth aspect of the embodiments of the present disclosure, a communication system is provided, including: a network device and a terminal. The network device is configured to perform the method described in any embodiment of the first aspect. The terminal is configured to perform the method described in any embodiment of the second aspect.

According to a seventh aspect of the embodiments of the present disclosure, a storage medium having instructions stored thereon is provided. When the instructions are running on a communication device, the communication device is caused to perform the method described in any embodiment of the first aspect or the second aspect.

According to an eighth aspect of the embodiments of the present disclosure, a program product is provided. When the program product is executed by a communication device, the communication device is caused to perform the method described in an alternative implementation of the first aspect or the second aspect.

According to a ninth aspect of the embodiments of the present disclosure, a computer program is provided. When the computer program is running on a communication device, the communication device is caused to perform the method described in an alternative implementation of the first aspect or the second aspect.

According to a tenth aspect of the embodiments of the present disclosure, a chip or a chip system is provided. The chip or chip system includes a processing circuit configured to perform the method described in an alternative implementation of the first aspect or the second aspect.

**It** is understandable that the above-mentioned network device, the terminal, the communication system, the storage medium, the program product, the computer program, the chip or chip system are all used to execute the method proposed in the embodiments of the present disclosure. Therefore, regarding the beneficial effects that can be achieved, reference may be made to the beneficial effects in the corresponding method, which will not be repeated here.

The embodiments of the present disclosure provide a paging method and device, a communication system, a communication device, and a storage medium. In some embodiments, the terms such as paging method, information processing method, etc. may be replaced with each other, the terms such as network device, information processing apparatus, communication apparatus, etc. may be replaced with each other, and the terms such as information processing system, communication system, etc. may be replaced with each other.

The embodiments of the present disclosure are not exhaustive, but are only illustrative, and are not intended to be a specific limitation on the protection scope of the present disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, respective embodiments may be arbitrarily combined, for example, some or all steps of different embodiments may be arbitrarily combined, and a certain embodiment may be arbitrarily combined with the optional implementations of other embodiments.

In each embodiment of the present disclosure, unless otherwise specified or there is a logical conflict, the terms and/or descriptions between the embodiments are consistent and may be referred to each other, and the technical features in different embodiments may be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In the embodiments of the present disclosure, "plurality" refers to two or more.

In some embodiments, the terms "at least one of", "one or more", "a plurality of", "multiple" etc. may be used interchangeably.

In some embodiments, descriptions such as "at least one of A, B", "A and/or B and/or C", etc. may include the situation where any one of A, B, C... exists alone, and also include the situation where any multiple of A, B, C... exist in any combination, and each situation may exist alone; for example, "at least one of A, B, C" includes the situation where A exists alone, B exists alone, C exists alone, the combination of A and B, the combination of A and C, the combination of B and C, and the combination of A, B and C; for example, A and/or B includes the situation where A exists alone, B exists alone, and the combination of A and B.

In some embodiments, descriptions such as "at least one of A, B", "A and/or B", "in one case, A; in another case, B", "in response to one case, A; in response to another case, B", etc. may include the following technical solutions according to situations: A is executed independently of B (i.e., in some embodiments, A); B is executed independently of A (i.e., in some embodiments, B); A and B are selectively executed (i.e., in some embodiments, one is selected from A and B to be executed); both A and B are executed (i.e., in some embodiments, A and B). When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and may be one or more. Taking the "first apparatus" as an example, the number of "apparatuses" may be one or more. In addition, the objects modified by different prefixes may be the same or different. For example, if the descriptive object is "apparatus", then the "first apparatus" and the "second apparatus" may be the same device or different apparatuses, and their types may be the same or different. For another example, if the descriptive object is "information", then the "first information" and the "second information" may be the same information or different information, and their contents may be the same or different.

In some embodiments, "including A", "comprising A", "used to indicate A", and "carrying A" may be interpreted as directly carrying A or indirectly indicating A.

In some embodiments, terms such as "time/frequency", "time/frequency domain", etc. refer to the time domain and/or the frequency domain.

In some embodiments, the terms such as "in response to...", "in response to determining...", "in the case of...", "at the time of...", "when...", "if...", "provide that...", etc. may be used interchangeably.

In some embodiments, the terms such as "greater than", "greater than or equal to", "not less than", "more than", "more than or equal to", "not less than", "higher than", "higher than or equal to", "not lower than", and "above" can be replaced with each other, and the terms such as "less than", "less than or equal to", "not greater than", "less than", "less than or equal to", "no more than", "lower than", "lower than or equal to", "not higher than", and "below" may be used interchangeably.

In some embodiments, the apparatus may be interpreted as physical or virtual, and their names are not limited to the names recorded in the embodiments. Terms such as "apparatus", "equipment", "device", "circuit", "network element", "node", "function", "unit", "section", "system", "network", "chip", "chip system", "entity", and "subject", etc. may be used interchangeably.

**In** some embodiments, the term "network" may be understood as apparatuses included in the network, such as an access network device, a core network device or the like.

In some embodiments, "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be used interchangeably.

In some embodiments, "terminal" or "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device can be replaced by a terminal. For example, the various embodiments of the present disclosure may also be applied to a situation in which the communication between the access network device, the core network device, or the network device and the terminal is replaced by the communication between multiple terminals (for example, device-to-device (D2D), vehicle-to-everything (V2X), etc.). In this case, the terminal may be configured to have all or part of functions of the access network device. In addition, the term such as "uplink" and "downlink" may also be replaced by the term corresponding to the communication between the terminals (for example, "side"). For example, the uplink channel, the downlink channel, etc. may be replaced by the side channel, and the uplink, the downlink, etc. may be replaced by the side link.

In some embodiments, the terminal may be replaced by an access network device, a core network device, or a network device. In this case, the access network device, the core network device, or the network device may also be configured to have all or part of the functions of the terminal.

In some embodiments, the acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, or any columns may also be implemented as an independent embodiment.

Paging parameters are defined in System Information Block Type 2 (SIB2). A network broadcasts these parameters periodically so that all terminals in a coverage area may receive them. Some of these parameters include a paging cycle, a paging frame, a paging sub-frame, a paging group ID, and a paging DRX. According to configuration parameters broadcast by the system, the terminal detects a paging physical downlink control channel (PDCCH) on only one PO within a paging cycle. The terminal determines a paging frame (PF) in a paging cycle and determines a PO corresponding to the PF. According to the terminal's identifier (UE ID), a system radio frame number (SFN) of the detected PF satisfies: (SFN+PF_offset) mod T=(T div N)*(UE_ID mod N).

An index Index(i_s) of the detected PO satisfies: i_s=floor(UE_ID/N)mod Ns.

**PF** offset represents a radio frame offset configured in system information. T represents a paging cycle. N represents the number of PFs within a paging cycle. UE ID is equal to 5G-S-TMSI mod 1024. Ns represents the number of POs in a PF, which may be 1, 2 and 4.

For transmission of paging information, the paging information of a group of terminals is mapped to the same PO. A group of terminals detects PDCCH and its scheduled physical downlink shared channel (PDSCH) carrying the paging information on the PO. As long as a base station sends the paging information to at least one terminal in the above group of terminals, the above group of terminals will try to receive the above PDSCH, which causes energy waste. In order to save power, 3GPP introduced paging early indication (PEI) information. Specifically, the above group of terminals mapped to the same PO is further divided into G paging subgroups. One PEI contains a bitmap indicating whether to wake up paging subgroups of all POs of one or two PFs. A timing relationship between a PEI and an associated PF/PO is determined according to the parameters configured by the system. A corresponding bit of the PEI is set to 1 only when the base station needs to send a paging message to at least one terminal in a paging subgroup. For a terminal, if its paging subgroup indication bit is not set, the terminal will no longer detect the paging PDCCH and its scheduled PDSCH after receiving the PEI, thereby saving energy of the terminal.

In order to further save power of the terminal, 3GPP is currently discussing a mechanism based on a low-power wake-up receiver (LP-WUR). In a power-saving state, the terminal may put a main radio (MR) into an ultra-deep sleep state and turn on the LP-WUR to listen for a wake-up signal supporting low power reception (LP-WUS). When the LP-WUR detects the LP-WUS for the terminal, the terminal turns on the MR and performs normal transmission. This method greatly reduces the power consumption of the MR, and the power consumption of the LP-WUR is very low, thereby achieving greater power saving gains.

Based on the LP-WUS, for a terminal in an idle state, after the terminal detects wake-up information of the LP-WUS, the terminal takes a relatively long time X ms to wake up the MR, and requires an additional time Y to complete time-frequency synchronization of the MR. Then the terminal may detect the PDCCH and its scheduled PDSCH on a paging location (PO) configured via corresponding system broadcasting. A delay for the terminal to receive the paging information depends on the above wake-up delay X, the synchronization time Y, and the relative position of the LP-WUS and the PO.

In the related art, the paging cycle is generally configured to be relatively long, such as 1.28s, so as to bring a greater power saving effect for the terminal. The terminal only detects one PO within one paging cycle. The LP-WUS cycle may be set relatively short, so that it is possible to support a smaller waiting delay. However, there is a contradiction between the above two mechanisms. For example, even if the LP-WUS cycle of the terminal is set very short, it indicates that after the terminal performs waking up and synchronization, the terminal has to wait for a time of Z ms before a timing position where it detects the PO. An average value of the above delay Z is approximately equal to half of the paging cycle. In order to solve the above problems, a concept of dynamic PF/PO may be introduced. Based on an LP-WUS indication, dynamic PF/PO is allocated at the timing after MR wake-up and synchronization, which may maximize reduction of the delay for the terminal to receive the paging information, but this method requires additional paging resources.

Therefore, the present disclosure provides a paging method and device, a communication system, a communication device, and a storage medium, which may determine whether it is required to detect the paging information based on the LP-WUS indication, reduce a paging delay without increasing a paging resource overhead, thereby achieving terminal power saving.

The method provided in the present disclosure is applicable to various communication systems, including but not limited to 4G, 5G, 5G-advance and subsequent communication technologies (such as 6G, etc.).

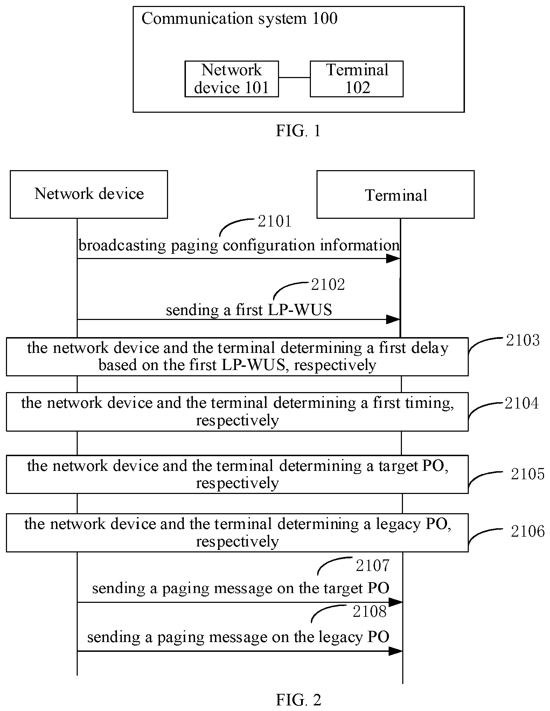

FIG. 1 is a schematic diagram of a communication system according to an embodiment of the present disclosure. As shown in FIG. 1, the communication system 100 may include a network device 101, and a terminal 102.

In some embodiments, the network device 101 may be a device that sends a first low power wake-up signal (LP-WUS).

**In** some embodiments, network device 101 may be a device that sends a paging message.

**In** some embodiments, the network device 101 may be a device that broadcasts paging configuration information.

**In** some embodiments, the network device 101 may be a device that determines a target PO.

In some embodiments, network device 101 may be a device that determines a legacy PO.

In some embodiments, the name of the network device 101 is not limited, and it may be, for example, a "paging message sending device" or an "LP-WUS sending device".

In some embodiments, the terminal 102 may be a terminal that receives the first LP-WUS.

In some embodiments, terminal 102 may be a terminal that receives a paging message.

**In** some embodiments, terminal 102 may be a terminal that receives paging configuration information.

In some embodiments, terminal 102 may be a terminal that determines a legacy PO.

In some embodiments, terminal 102 may be a terminal that determines a target PO.

In some embodiments, the name of the terminal 102 is not limited, and it may be, for example, a "paging message receiving device, an "LP-WUS receiving device", a "receiving terminal", etc.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but the present disclosure is not limited thereto.

The network device 101 in the embodiments of the present disclosure may be an entity for transmitting or receiving signals on the network side. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. The embodiments of the present disclosure do not limit the specific technology and specific device form adopted by the network device. The network device in the embodiments of the present disclosure may include a central unit (CU) and a distributed unit (DU), in which the CU may also be called a control unit. A protocol layer of the network device, such as base station, may be divided by adopting the CU-DU structure. Some functions of the protocol layer are centrally controlled by the CU, and some or all of remaining functions of the protocol layer are distributed in the DU which is centrally controlled by the CU.

The terminal 102 in the embodiments of the present disclosure is an entity for receiving or transmitting signals on the user side, such as a mobile phone. The terminal may also be called a terminal device (terminal), a user equipment (UE), a mobile station (MS), a mobile terminal device (MT), etc. The terminal may be a car with a communication function, a smart car, a mobile phone, a wearable device, a tablet computer (Pad), a computer with a wireless transceiver function, a virtual reality (VR) terminal, an augmented reality (AR) terminal, a wireless terminal in industrial control (industrial control), a wireless terminal in self-driving, a wireless terminal in remote medical surgery, a wireless terminal in smart grid (smart grid), a wireless terminal in transportation safety (transportation safety), a wireless terminal in smart city (smart city), a wireless terminal in smart home (smart home), etc. The embodiments of the present disclosure do not limit the specific technology and specific device form adopted by the terminal.

It can be understood that the communication system described in the embodiments of the present disclosure aims to more clearly illustrate the technical solution of the embodiments of the present disclosure, and does not constitute a limitation on the technical solution proposed in the embodiments of the present disclosure. A person skilled in the art can know that with the evolution of the system architecture and the emergence of new business scenarios, the technical solution proposed in the embodiments of the present disclosure are also applicable to similar technical problems.

The following embodiments of the present disclosure may be applied to the communication system 100 or part of the entities shown in FIG. 1, but are not limited thereto. The entities shown in FIG. 1 are examples, and the communication system may include all or part of the entities in FIG. 1A, or may include other entities other than those shown in FIG. 1, and the number and form of the entities are arbitrary, each entity may be physical or virtual, and the connection relationships between the entities are examples, and the entities may be connected or disconnected, and the connection may be in any manner, which may be a direct connection or an indirect connection, and may be a wired connection or a wireless connection.

The embodiments of the present disclosure may be applied to, Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other methods, and next-generation systems based on them. In addition, multiple systems can also be combined (for example, a combination of LTE or LTE-A and 5G, etc.) for application.

FIG. 2 is an interactive schematic diagram of a paging method according to an embodiment of the present disclosure. As shown in FIG. 2, an embodiment of the present disclosure relates to a paging method which may be performed by a communication system, such as the communication system 100 as shown in FIG. 1. The communication system includes a network device and a terminal, and the method may include the following steps.

At step 2101, the network device broadcasts paging configuration information.

In some embodiments, the paging configuration information includes a paging cycle, for example, the paging cycle T=1.28s.

In some embodiments, the paging configuration information is used to determine a paging set, which includes *N* paging frames PF within the paging cycle, and each PF includes *Nₛ* POs. Optionally, in some embodiments, the *NPFs* or *N*Nₛ* POs within the above paging cycle T may be referred to as "PFs/POs configured via the system broadcasting".

In some embodiments, the network device may broadcast the paging configuration information in different ways, such as wireless resources, which is not limited by the present disclosure.

In some embodiments, a bearer of the paging configuration information may be a system broadcast block SIB1, or may be SIBn, which is not limited in the present disclosure.

In some embodiments, through the paging configuration information broadcast by the network device, the terminal and the network device may determine one PO from the PFs/POs configured via the system broadcasting according to the related art, and the PO may be the legacy PO described in the disclosure or the target PO described in the disclosure. It may be understood that the target PO has a lower latency than the legacy PO.

In some embodiments, step 2101 is an optional step, and this step may be omitted or replaced in different embodiments. As long as it is possible to determine a PO with a lower latency in the PFs/POs configured via the system broadcasting without the need for the network to configure an additional paging resource, it falls within the scope of the present disclosure.

At step 2102, the network device sends a first LP-WUS to the terminal.

**In** some embodiments, the first LP-WUS includes wake-up information for instructing the terminal to wake up the MR.

In some embodiments, the first LP-WUS may be used to wake up the MR of the terminal when the MR is in a sleep state, so as to achieve the purpose of power saving.

In some embodiments, for one LP-WUS cycle *T_{lpwus},* it may include multiple LP-WUSs, for example, M. Each LP-WUS may be used to wake up one or more terminal groups. For example, if the network device sends an LP-WUS to at least one terminal in a terminal group, all terminals in the terminal group are wakened up. The terminal group may be a terminal group corresponding to one PO or a subgroup of a terminal group corresponding to one PO, which is not limited in the present disclosure.

In some embodiments, the first LP-WUS may refer to any one of the M LP-WUSs. For example, the first LP-WUS may be an LP-WUS associated with the terminal or the terminal group or subgroup to which the terminal belongs. In other words, the network device sends the first LP-WUS to at least one terminal in the terminal group or subgroup to which the terminal belongs, and all terminals in the terminal group or subgroup are wakened up.

In some embodiments, the first LP-WUS may include multiple indication bits, and indication bits at different positions may correspond to different terminals. For example, a bit position, in the first LP-WUS, of the wake-up information for instructing the terminal to wake up its MR may be used to determine the target PO.

At step 2103, the network device and the terminal determine a first delay based on the first LP-WUS, respectively.

In some embodiments, the first delay includes at least one of: a time duration required for the terminal to wake up the MR; a time duration required for the terminal to complete time-frequency synchronization on the MR; a time duration between a paging early indication (PEI) configured via the system broadcasting and a PF/PO associated with the PEI; or a time duration for the terminal to prepare to monitor the paging message.

The time duration required for the terminal to wake up the MR may be the time required for the terminal to wake up the MR after detecting the wake-up information of the LP-WUS. The time duration required for the terminal to complete time-frequency synchronization on the MR may refer to the time required for the terminal to perform time-frequency synchronization on the MR after waking up the MR. Then, the terminal may detect the PDCCH on a corresponding PO and the PDSCH scheduled by it, so as to receive a paging message carried on the PDSCH.

Optionally, the time duration between the PEI configured via the system broadcasting and the PF/PO associated with the PEI in the first delay means the delay between a position of a PEI and a position of its associated PF/PO (in a case where the PEI is applied, each PEI configured via the system broadcasting may be associated with one or two PFs/POs).

The time duration for the terminal to prepare to monitor the paging message may refer to other processing delays, which is not limited in the present disclosure.

In some embodiments, the first delay is used to determine the target PO. In other words, the target PO may be a PO that satisfies the first delay within the paging cycle, which may have a shorter waiting delay than a legacy PO.

At step 2104, the network device and the terminal determine a first timing, respectively.

In some embodiments, the first timing is associated with the first LP-WUS.

In some embodiments, the first timing is any one of: an end time point of the last symbol of a channel of the first LP-WUS; an end time point of the last time slot of the first LP-WUS; an end time point of the last sub-frame of the first LP-WUS; or an end time point of the last radio frame of the first LP-WUS.

In some embodiments, the first timing is an end time point of the last symbol of a channel of a second LP-WUS, in which the second LP-WUS is the last one of LP-WUSs in an LP-WUS cycle in which the first LP-WUS is located; an end time point of the last time slot of the second LP-WUS; an end time point of the last sub-frame of the second LP-WUS; an end time point of the last radio frame of the second LP-WUS; or an end time point of an LP-WUS cycle in which the first LP-WUS is located.

In some embodiments, the name of the first timing is not limited and may be "start time", "first time", etc.

**In** the embodiments of the present disclosure, the manner in which the terminal determines the first timing is the same as the manner in which the network device determines the first timing, which will not be described again.

At step 2105, the network device and the terminal determine a target PO, respectively.

In some embodiments, the network device determines a PO that meets a preset condition within the paging cycle as the target PO.

In some embodiments, the target PO is a PO used by the network device to send a paging message to the terminal.

In some embodiments, the target PO is one PO in a PO set configured by a system message (i.e., the "POs configured via the system broadcasting" or "paging set" described above). In some embodiments, the preset condition may be that an interval between the second timing associated with the target PO and the first timing is greater than or equal to the first delay. In other words, the target PO may be a PO that satisfies the first delay, or a PO after the first delay.

A process of determining the target PO is described in detail below by using any of the following examples.

### Example 1

In some embodiments, the target PO is the first one of POs after the first delay.

In some embodiments, the second timing includes any one of: a start time point of the first symbol of the first PO; a start time point of the first time slot of the first PO; a start time point of the first sub-frame of the first PO; or a start time point of the first radio frame of the first PO.

In some embodiments, the target PO is one PO in the first one of PFs after the first delay.

In some embodiments, the second timing is a start time point of the first PF.

In some embodiments, determining the target PO from the first PF may include determining the target PO based on the number of POs included in the first PF and an identifier of the terminal.

For example, the target PO in the first PF is calculated according to i_s=floor(UE_ID/*N*) mod*Nₛ*.

In some embodiments, determining the target PO from the first PF may include determining the first one of POs in the first PF as the target PO.

For example, an index of the target PO in the first PF is i_s=0.

In some embodiments, determining the target PO from the first PF may include determining the target PO from the first PF according to a bit position, in the first LP-WUS, of the wake-up information for instructing the terminal to wake up the MR.

In some embodiments, determining the target PO according to the bit position, in the first LP-WUS, of the wake-up information for instructing the terminal to wake up the MR includes: determining, according to the bit position and the number of multiple paging subgroups included in each PO within the paging cycle, a PO where the bit position is located in the first PF; and determining the PO as the target PO.

For example, assuming that each PO is divided into G paging subgroups, an index of the PO to which the k-th bit of the LP-WUS information is mapped may be $\left⌊k/G\right⌋$*.* For example, one PO is divided into 4 subgroups, and one PF has 4 POs. If the 5-th bit of the first LP-WUP instructs a certain terminal wakes up the MR, it may be determined that an index of the target PO corresponding to this terminal is 1, that is, the second PO.

In some embodiments, determining the PO that meets the preset condition within the paging cycle as the target PO includes: determining a second PO as the target PO, in which the second PO is one PO among first *n* POs after the first delay, $2 \leq n \leq \left⌊N⋅{N}_{s}⋅{T}_{lpwus}/T\right⌋$, where *T_{lpwus}* is an LP-WUS cycle, *T* is the paging cycle, *N* is the number of PFs included in the paging cycle, *Nₛ* is the number of POs included in each PF.

In some embodiments, the second timing may be any one of: a start time point of the first symbol of a first one of the first *n* POs; a start time point of the first time slot of a first one of the first *n* POs; a start time point of the first sub-frame of a first one of the first *n* POs; or a start time point of the first radio frame of a first one of the first *n* POs.

In some embodiments, the second PO may be a first one of the first *n* POs.

In some embodiments, the second PO may be a PO determined from the first *n* POs according to *n* and an identifier of the terminal.

For example, for one LP-WUS, its associated PO is the first *n* POs satisfying the delay D in the PO set configured via the system broadcasting, where *n* is greater than or equal to 1. For example, $n \leq N ⋅ {N}_{s} ⋅ \left⌊{T}_{lpwus}/T\right⌋$. For one terminal detecting the LP-WUS, an index of a PO detected by the terminal in the above *n* POs may be UE_ID mod *n.*

In some embodiments, the second PO may be a PO determined from the first *n* POs according to a bit position, in the first LP-WUS, of the wake-up information for instructing the terminal to wake up the MR, and the number of multiple paging subgroups included in each PO within the paging cycle.

For example, assuming that each PO is divided into *G* paging subgroups, an index of the PO to which the k-th bit of the LP-WUS information is mapped may be $\left⌊k/G\right⌋$*.*

In some embodiments, determining the PO that meets the preset condition within the paging cycle as the target PO may include determining the target PO from first *m* PFs after the first delay, $2 \leq m \leq \left⌊N⋅{T}_{lpwus}/T\right⌋$, where *T_{lpwus}* is an LP-WUS cycle, *T* is the paging cycle, *N* is the number of PFs included in the paging cycle.

In some embodiments, the second timing may be a start time point of the first one of the first *m* PFs.

In some embodiments, determining the target PO from the first *m* PFs after the first delay may include determining a second PF, in which the second PF is the first one of the first *m* PFs after the first delay, or the second PF is a PF determined from the first *m* PFs according to *m* and an identifier of the terminal; and determining the target PO from the second PF according to the number of POs included in the second PF, the number of PFs included in the paging cycle, and the identifier of the terminal.

For example, the second PF is calculated according to UE_ID mod *m,* and then the target PO is calculated according to i_s=floor(UE_ID/*N*) mod*Nₛ*.

In some embodiments, determining the target PO from the first *m* PFs after the first delay may include determining, according to the bit position, in the first LP-WUS, of the wake-up information for instructing the terminal to wake up the MR, and the number of multiple paging subgroups included in each PO within the paging cycle, a PO where the bit position is located in the first *m* PFs as the target PO.

For example, assuming that each PO is divided into *G* paging subgroups, an index of the PO to which the k-th bit of the LP-WUS information is mapped may be $\left⌊k/G\right⌋$*.*

### Example 2

In some embodiments, determining the PO that meets the preset condition within the paging cycle as the target PO may include determining the target PO from a first PF group, in which the first LP-WUS is associated with the first PF group, the first PF group is a first one of PF groups after the first delay, the paging cycle includes *N*/*P* PF groups, and each PF group includes *P* PFs.

In some embodiments, the second timing may be a start time point of the first one of PFs in the first PF group.

In some embodiments, determining the target PO from the first PF group may include determining a third PF, in which the third PF is the first one of PFs in the first PF group, or the third PF is a PF determined from the first PF group according to *P* and an identifier of the terminal; and determining the target PO from the third PF according to the number of POs included in the third PF, the number of PFs included in the paging cycle, and the identifier of the terminal.

For example, the third PF is calculated according to UE_ID mod *P*, and then the target PO is calculated according to i_s=floor(UE_ID/*N*) mod *Nₛ*; or the third PF is calculated according to mod(UE_ID,*P*), and then the target PO is calculated according to $mod \left(\left⌊UE_ID/P\right⌋, {N}_{s}\right)$*.*

In some embodiments, determining the target PO from the first PF group may include determining the target PO from the *P* PFs in the first PF group according to *P,* the number of POs included in each PF and the identifier of the terminal.

For example, the target PO may be calculated according to UE_ID mod (*P***Nₛ*)*.*

### Example 3

**In** some embodiments, the target PO may be determined from *Q* PFs after the first delay, in which the LP-WUS cycle in which the first LP-WUS is located includes M LP-WUSs, and the M LP-WUSs are associated with *Q* PFs in the paging set, *Q* = *N · T_{lpwus}*/*T*, where *T_{lpwus}* is the LP-WUS cycle and *T* is the paging cycle; or the target PO is determined from the first one of PF groups after the first delay, in which the paging cycle includes *N*/*Q* PF groups, and each PF group includes *Q* PFs.

In some embodiments, the second timing may be a start time point of the first one of the *Q* PFs after the first delay.

In some embodiments, determining the target PO from the *Q* PFs after the first delay may include determining the target PO from the *Q* PFs after the first delay according to at least one of an index of the first LP-WUS in the LP-WUS cycle, *Q*, M or *Nₛ.*

For example, the index of the first LP-WUS in the LP-WUS cycle is *m, m* = *0,1, ... M -* 1, and an index of the target PO is $\left⌊m\left(Q⋅{N}_{s}\right)/M\right⌋$ or *m* mod (*Q***Ns*)*.*

In some embodiments, determining the target PO from the *Q* PFs after the first delay may include: determining a fourth PF from the *Q* PFs after the first delay according to an index of the first LP-WUS in the LP-WUS cycle, *Q* and M, and determining the target PO from the fourth PF according to an identifier of the terminal, *N* and *Nₛ*.

For example, an index of the fourth PF is $\left⌊mQ/M\right⌋$ or *m* mod *Q.* An index of the target PO is i_s = floor (UE_ID/N) mod *Nₛ*.

In the above embodiments, for any one of the M LP-WUSs, a PO associated with said any one LP-WUS is one PO in the *Q* PFs, multiple POs in the same PF are associated with different LP-WUSs, and one or more terminals configured with the same LP-WUS is(are) associated with the same PO in the *Q* PFs.

In some embodiments, determining the target PO from the *Q* PFs after the first delay may include: determining a fifth PF from the *Q* PFs after the first delay according to an index of the first LP-WUS in the LP-WUS cycle, *Q* and M, and determining the target PO from the fifth PF according to an identifier of the terminal, *N* and *Nₛ*.

For example, the index of the first LP-WUS in the LP-WUS cycle is *m,* the index of the fifth PF is $\left⌊mQ/M\right⌋$ or *m* mod *Q.* The index of the target PO is i_s = floor (UE_ID/N) mod *Nₛ*.

In some embodiments, determining the target PO from the *Q* PFs after the first delay may include determining the target PO from the *Q* PFs after the first delay according to a bit position, in the first LP-WUS, of the wake-up information for instructing the terminal to wake up the MR, and the number of multiple paging subgroups included in each PO within the paging cycle.

For example, assuming that each PO is divided into *G* paging subgroups, an index of the PO in the associated PF to which the k-th bit of the LP-WUS information is mapped may be $\left⌊k/G\right⌋$*.*

In the above embodiments, for any one of the M LP-WUSs, a PO associated with said any one LP-WUS belongs to multiple POs in one PF among the *Q* PFs, and one or more terminals configured with the same LP-WUS is(are) associated with the same PF among the *Q* PFs.

In some embodiments, determining the target PO from the Q PFs after the first delay may include: determining an index of a starting PO in the *Q* PFs according to an index of the first LP-WUS in the LP-WUS cycle, *Q*, M and *Nₛ*, and determining the target PO according to the index of the starting PO, *Q* and *Nₛ*.

For example, for one LP-WUS, its associated POs are *n* POs in the *Q* PFs, the index of the first LP-WUS in the LP-WUS cycle is *m,* the index of the starting PO of the *n* POs in the *Q* PFs is $k = \left⌊m\left(Q⋅{N}_{s}\right)/M\right⌋$ or *k* = *m* mod (*Q*Nₛ*)*.* The indices of *n* POs are *mod*(*k* + *i*, *Q* · *Nₛ*) *i* = 0,1, *... n* - 1*.*

In some embodiments, determining the target PO from the *Q* PFs after the first delay may include determining the target PO from the *Q* PFs according to a bit position, in the first LP-WUS, of the wake-up information for instructing the terminal to wake up the MR, and the number of a plurality of paging subgroups included in each PO within the paging cycle.

For example, assuming that each PO is divided into *G* paging subgroups, an index of the PO in the associated *Q* PFs to which the k-th bit of the LP-WUS information is mapped may be $\left⌊k/G\right⌋$*.*

In the above embodiments, for any one of the M LP-WUSs, a PO associated with said any one LP-WUS belongs to *x* POs in the *Q* PFs, 1 ≤ *x* ≤ *Q · Nₛ*.

In some embodiments, determining the target PO from the *Q* PFs after the first delay may include: determining an index of a starting PF among the *Q* PFs according to an index of the first LP-WUS in the LP-WUS cycle, *Q* and M, determining indices of *y* PFs among the *Q* PFs according to the index of the starting PF and *Q,* and determining the target PO from the *y* PFs according to an identifier of the terminal, *N* and *Nₛ*.

For example, the index of the first LP-WUS in the LP-WUS cycle is *m,* the index of the starting PF is $k = \left⌊mQ/M\right⌋$ or *k* = *m* mod *Q.* The indices of *y* PFs are *mod*(*k* + *i*, *Q*)*i* = 0,1, ... *y* - 1. The index of the target PO is i_s = floor (UE_ID/N) mod *Nₛ*.

In some embodiments, determining the target PO from the *Q* PFs after the first delay may include determining the target PO from the *Q* PFs according to a bit position, in the first LP-WUS, of the wake-up information for instructing the terminal to wake up the MR, and a number of a plurality of paging subgroups included in each PO within the paging cycle.

For example, assuming that each PO is divided into *G* paging subgroups, an index of the PO in the associated *Q* PFs to which the k-th bit of the LP-WUS information is mapped may be $\left⌊k/G\right⌋$*.*

In the above embodiments, for any one of the M LP-WUSs, a PF associated with said any one LP-WUS belongs to the *y* PFs among the *Q* PFs, 1 ≤ *y* ≤ *Q.*

### Example 4

In some embodiments, determining the target PO may include determining one PO in a first PF group after the first delay as the target PO, in which the M LP-WUSs are associated with the first PF group, the first PF group is the first one of PF groups after the first delay, the paging cycle includes *N*/*P* PF groups, and each PF group includes *P* PFs.

For example, within the PF/PO set configured via the system broadcasting, PFs within one paging cycle are equally divided into *N*/*P* groups, each group contains P adjacent PFs. For example, a PEI indicates paging subgroup information of P PFs. M LP-WUSs in an LP-WUS cycle may be associated with the first one of PF groups that meets the delay D.

In some embodiments, the second timing is a start time point of the first one of PFs in the first PF group.

In some embodiments, determining the target PO from the first PF group after the first delay may include: determining a sixth PF in the first PF group according to *P* and an identifier of the terminal, and determining the target PO from the sixth PF according to *Nₛ*, *N,* and the identifier of the terminal.

For example, the index of the sixth PF is UE_ID mod *P*, and the index of the target PO is i_s=floor(UE_ID/*N*) mod*Nₛ*.

In some embodiments, determining the target PO from the first PF group after the first delay may include: determining a seventh PF in the first PF group according to a modulo operation on *P* and an identifier of the terminal, and determining the target PO from the seventh PF according to *Nₛ*, *P* and the identifier of the terminal.

For example, the index of the seventh PF is *mod*(UE_ID, P), and the index of the target PO is $mod \left(\left[UE_ID/P\right], {N}_{s}\right)$*.*

In some embodiments, determining the target PO from the first PF group after the first delay may include determining the target PO from the *P* PFs in the first PF group according to *P, Nₛ* and an identifier of the terminal.

For example, the index of the target PO among all POs of the *P* PFs is UE_ID mod (*P***Nₛ*)*.*

In some embodiments, determining the target PO from the first PF group after the first delay may include: determining a starting PF among the *P* PFs according to *P* and the number of LP-WUSs included in an LP-WUS cycle, and determining the target PO from the starting PF according to *Nₛ*, *N* and an identifier of the terminal.

For example, the index of the starting PF is $\left⌊mP/M\right⌋$ or m mod *P*, and the index of the target PO is i_s=floor(UE_ID/N) mod *Nₛ*.

In some embodiments, determining the target PO from the first PF group after the first delay may include: determining the target PO from the *P* PFs according to a bit position, in the first LP-WUS, of the wake-up information for instructing the terminal to wake up the MR, and the number of multiple paging subgroups included in each PO within the paging cycle.

For example, assuming that each PO is divided into G paging subgroups, an index of the PO in the associated PF to which the k-th bit of the LP-WUS information is mapped may be $\left⌊k/G\right⌋$*.*

### Example 5

In some embodiments, the target PO may be determined from a first short cycle, in which the paging cycle includes K short cycles, each short cycle includes W PFs, W=N/K, the first LP-WUS is associated with a PF or a PO in the first short cycle, and the first short cycle is the first one of short cycles after the first delay.

For example, a short paging cycle is introduced into the PF/PO set configured via the system broadcasting. A PF/PO in a short paging cycle that satisfies the delay D is associated with one LP-WUS. The paging cycle is T, the number of PFs within a paging cycle is N, and the paging cycle T may be divided into K short paging cycles T/K, each short paging cycle T/K includes (P=*N*)/K PFs. Each PF still includes *Nₛ* POs according to the configuration via the system broadcasting. When the PEI is configured, the PEI in each paging cycle T is also divided into K short paging cycles T/K accordingly. An association relationship between the PEI and the PF/PO remains unchanged. The PF/PO mapped by each UE ID in the short paging cycle is defined. Accordingly, the number of PFs/POs of the terminal within time T increases to K. For a terminal that detects one LP-WUS, its associated PF/PO is the nearest PF/PO that satisfies the delay D and is allocated to this terminal according to the above short paging cycle.

In some embodiments, the second timing may be any one of: a start time point of the first symbol of the first PO, in which the first PO is the first one of POs after the first delay; a start time point of the first time slot of the first PO; a start time point of the first sub-frame of the first PO; a start time point of the first radio frame of the first PO; a start time point of the first PF, in which the first PF is the first one of PFs after the first delay; a start time point of the first symbol of the PEI associated with the first PF; a start time point of the first time slot of the PEI associated with the first PF; a start time point of the first sub-frame of the PEI associated with the first PF; a start time point of the first radio frame of the PEI associated with the first PF; a start time point of a short paging cycle where the first PO is located; or a start time point of a short paging cycle where the first PF is located.

In some embodiments, determining the target PO from the first short cycle may include: determining an index of an eighth PF in the first short cycle according to W and an identifier of the terminal, in which the eighth PF is a PF associated with the first LP-WUS in the first short cycle; and determining the target PO from the eighth PF.

For example, the index of the eighth PF is UE_ID mod *P*, and the index of the target PO is i_s=floor(UE_ID/*N*) mod *Nₛ*; or the index of the eighth PF is *mod*(UE_ID, *P*), and the index of the target PO is $mod \left(\left⌊UE_ID/P\right⌋, {N}_{s}\right)$*.*

In some embodiments, determining the target PO from the first short cycle may include determining the target PO in the first short cycle according to W, the identifier of the terminal, and *Nₛ*. For example, the index of the target PO is UE_ID mod (*P** *Nₛ*)*.*

In the above embodiments, the target PO is determined by different methods, so that the network device may send a paging message to the terminal through the determined target PO, which reduces the paging delay without increasing paging resources, thereby achieving the purpose of power saving.

In this embodiment of the present disclosure, the method in which the terminal determines the target PO is the same as the method in which the network device determines the target PO, which will not be repeated here.

At step 2106, the network device and the terminal determine a legacy PO, respectively.

In some embodiments, the terminal receives paging configuration information broadcast by the network device and determines the legacy PO according to the paging configuration information.

In some embodiments, the network device determines, according to the identifier of the terminal, *N*, the paging cycle, and the radio frame offset, a PF where the legacy PO is located, and then determines the legacy PO according to the identifier of the terminal, *N*, and*Nₛ*.

**For** example, according to the identifier UEID of the terminal, the system frame number (SFN) of the PF where the legacy PO is located satisfies:
$\left(SFN+PF_offset\right) mod T = \left(T div N\right) * \left(UE_ID mod N\right) .$

The index Index(i_s) of the legacy PO satisfies: i_s = floor (UE_ID/N) mod*Ns.*

PF offset represents the radio frame offset configured in system information.

T represents the paging cycle.

*N* represents the number of PFs in the paging cycle.

UE ID equals to 5G-S-TMSI mod 1024.

Ns represents the number of POs in a PF, which may be 1, 2 or 4.

In some embodiments, the legacy PO is determined to serve as an optional solution for the method of the embodiments, that is, the paging message may be sent on the target PO or on the legacy PO.

For example, the terminal described in the present disclosure may be a terminal using the LP-WUS or a terminal not using the LP-WUS. For the terminal not using the LP-WUS, the network device needs to send the paging message to the terminal not using the LP-WUS on the legacy PO. For the terminal using the LP-WUS, the network device may send the paging message to the terminal on the target PO. Optionally, if the network device fails to send a paging message to the terminal through the target PO (for example, the terminal does not respond to the paging), the network device may send a paging message to the terminal on the legacy PO, and the present disclosure does not limit thereto.

In the embodiments of the present disclosure, the manner in which the terminal determines the legacy PO is the same as the manner in which the network device determines the legacy PO, which will not be repeated here.

**In** some embodiments, step 2106 is an optional step and may be omitted or replaced in different embodiments.

At step 2107, the network device sends a paging message to the terminal on the target PO.

In some embodiments, the network device sends the paging message to the target PO of the terminal through the target PO.

In the embodiments of the present disclosure, "the network device sending a paging message to the terminal" may mean that the network device sends a PDSCH carrying the paging message and scheduled by the PDCCH to the terminal. Accordingly, the terminal receives the PDSCH carrying the paging message and scheduled by the PDCCH.

In some embodiments, the type of the paging message is not limited.

At step 2108, the network device sends a paging message to the terminal on the legacy PO.

In some embodiments, the network device determines the legacy PO based on the broadcast paging configuration information, and sends the paging message to the terminal through the legacy PO, which may be used as an optional solution of the present method.

In some embodiments, step 2108 is optional and may be omitted or replaced in different embodiments. For example, step 2108 may be performed when step 2107 fails to execute (for example, the terminal does not respond to the paging message sent by the network device on the target PO, in other words, the terminal fails to receive the paging message on the target PO).

The paging method involved in the embodiments of the present disclosure may include at least one of steps 2101 to 2108. For example, step 2101 may be implemented as an independent embodiment, step 2102 may be implemented as an independent embodiment, and so on, but the present disclosure is not limited thereto. Steps 2101+2102, steps 2101+2102+2103, steps 2101+2102+2103+2104, steps 2105+2106+2107+2108, steps 2105+2109+2110+2111, steps 2105+2106+2107+2108+2109+2110+2111+2112, steps 2101+2102+2103+2104+2105+2106+2107+2108+2109+2110+2111+2112 may be implemented as independent embodiments, but the present disclosure is not limited to thereto.

In some embodiments, step 2101, step 2102, step 2103, and step 2104 are optional, and one or more of these steps may be omitted or replaced in different embodiments.

In an implementation or embodiment, unless there is any contradiction, each step may be independent, arbitrarily combined or exchanged in order, the optional implementations or optional embodiments may be arbitrarily combined, and may be arbitrarily combined with any steps of other implementations or other embodiments.

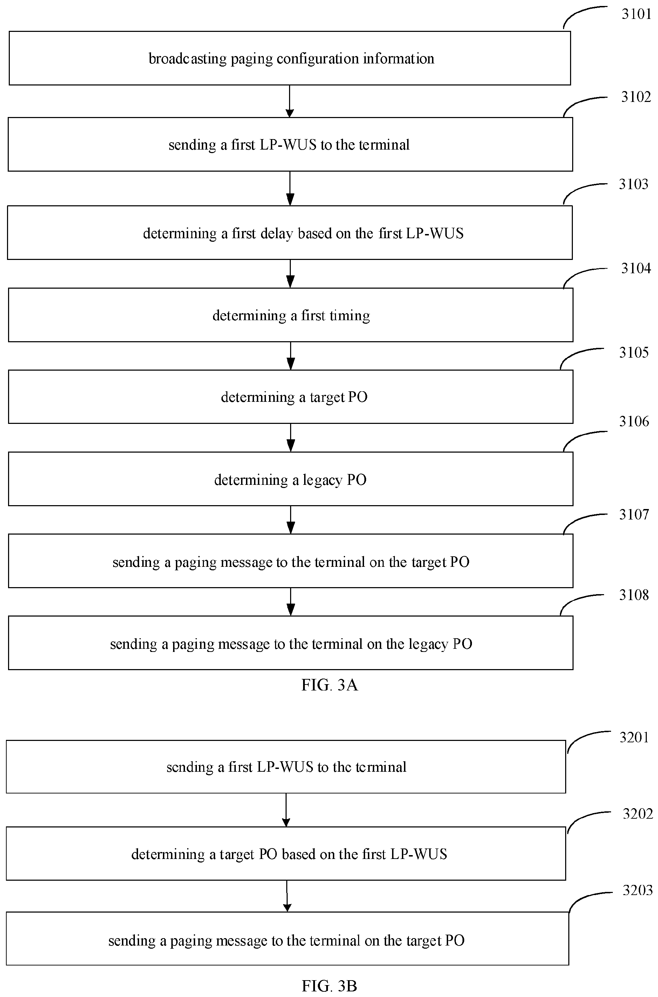

FIG. 3A is a flowchart of a paging method according to an embodiment of the present disclosure. This embodiment of the present disclosure relates to a paging method, and the method includes the following steps.

At step 3101, paging configuration information is broadcast.

Regarding the optional implementation of step 3101, reference may be made to the optional implementation of step 2101 in FIG. 2 and other related parts of the embodiment involved in FIG. 2, which are not repeated in detail here.

At step 3102, a first LP-WUS is sent to a terminal.

Regarding the optional implementation of step 3102, reference may be made to the optional implementation of step 2105 in FIG. 2 and other related parts of the embodiment involved in FIG. 2, which are not repeated in detail here.

At step 3103, a first delay is determined based on the first LP-WUS.

Regarding the optional implementation of step 3103, reference may be made to the optional implementation of step 2103 in FIG. 2 and other related parts of the embodiment involved in FIG. 2, which are not repeated in detail here.

At step 3104, a first timing is determined.

Regarding the optional implementation of step 3104, reference may be made to the optional implementation of step 2104 in FIG. 2 and other related parts of the embodiment involved in FIG. 2, which are not repeated in detail here.

At step 3105, a target PO is determined.

Regarding the optional implementation of step 3105, reference may be made to the optional implementation of step 2105 in FIG. 2 and other related parts of the embodiment involved in FIG. 2, which are not repeated in detail here.

At step 3106, a legacy PO is determined.

Regarding the optional implementation of step 3106, reference may be made to the optional implementation of step 2106 in FIG. 2 and other related parts of the embodiment involved in FIG. 2, which are not repeated in detail here.

At step 3107, a paging message is sent to the terminal on the target PO.

Regarding the optional implementation of step 3107, reference may be made to the optional implementation of step 2107 in FIG. 2 and other related parts of the embodiment involved in FIG. 2, which are not repeated in detail here.

At step 3108, a paging message is sent to the terminal on the legacy PO.

Regarding the optional implementation of step 3108, reference may be made to the optional implementation of step 2108 in FIG. 2 and other related parts of the embodiment involved in FIG. 2, which are not repeated in detail here.

The paging method involved in the embodiments of the present disclosure may include at least one of steps 3101 to 3108. For example, step 3101 may be implemented as an independent embodiment, step 3102 may be implemented as an independent embodiment, and so on, but the present disclosure is not limited thereto. Steps 3101+3106+3108, steps 3102+3103+3104+3105+3107, steps 3101+3102+3103+3104+3105+3106+3107+3108 may be implemented as independent embodiments, but the present disclosure is not limited to thereto.

In some embodiments, step 3101, step 3106, and step 3108 are optional, and one or more of these steps may be omitted or replaced in different embodiments.

FIG. 3B is a flowchart of a paging method according to an embodiment of the present disclosure. This embodiment of the present disclosure relates to a paging method, and the method includes the following steps.

At step 3201, a first LP-WUS is sent to a terminal.

Regarding the optional implementation of step 3201, reference may be made to the optional implementations of step 2102 in FIG. 2 and step 3102 in FIG. 3A, and other related parts of the embodiments involved in FIG. 2 and FIG. 3A, which are not repeated in detail here.

At step 3202, a target PO is determined based on the first LP-WUS.

Regarding the optional implementation of step 3202, reference may be made to the optional implementations of steps 2103, 2104 and 2105 in FIG. 2, steps 3103, 3104 and 3105 in FIG. 3A, and other related parts of the embodiments involved in FIG. 2 and FIG. 3A, which are not repeated in detail here.

At step 3203, a paging message is sent to the terminal on the target PO.

Regarding the optional implementation of step 3203, reference may be made to the optional implementation of step 2107 in FIG. 2 and step 3107 in FIG. 3A, and other related parts of the embodiments involved in FIG. 2 and FIG. 3A, which are not repeated in detail here.

In the embodiments of the present disclosure, step 3201 may be combined with step 3103 in FIG. 3A, and step 3202 may be combined with step 3102 or 3107 in FIG. 3A.

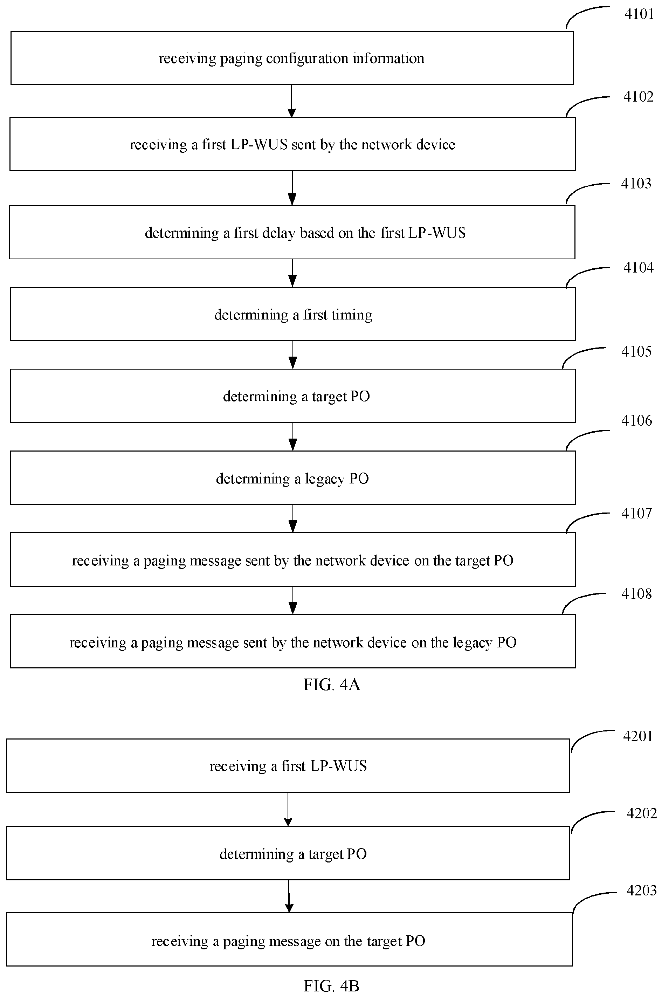

FIG. 4A is a flowchart of a paging method according to an embodiment of the present disclosure. This embodiment of the present disclosure relates to a paging method, and the method includes the following steps.

At step 4101, paging configuration information is received.

Regarding the optional implementation of step 4101, reference may be made to the optional implementations of step 2101 in FIG. 2 and step 3101 in FIG. 3A, and other related parts of the embodiments involved in FIG. 2 and FIG. 3A, which are not repeated in detail here.

At step 4102, a first LP-WUS is received.

Regarding the optional implementation of step 4102, reference may be made to the optional implementations of step 2102 in FIG. 2, step 3102 in FIG. 3A and step 3201 in FIG. 3B, and other related parts of the embodiments involved in FIG. 2, FIG. 3A and FIG. 3B, which are not repeated in detail here.

At step 4103, a first delay is determined.

Regarding the optional implementation of step 4103, reference may be made to the optional implementation of step 2103 in FIG. 2 and other related parts of the embodiment involved in FIG. 2, which are not repeated in detail here.

At step 4104, a first timing is determined.

Regarding the optional implementation of step 4104, reference may be made to the optional implementation of step 2104 in FIG. 2 and other related parts of the embodiment involved in FIG. 2, which are not repeated in detail here.

At step 4105, a target PO is determined.

Regarding the optional implementation of step 4105, reference may be made to the optional implementation of step 2105 in FIG. 2 and other related parts of the embodiment involved in FIG. 2, which are not repeated in detail here.

At step 4106, a legacy PO is determined.

Regarding the optional implementation of step 4106, reference may be made to the optional implementation of step 2106 in FIG. 2 and other related parts of the embodiment involved in FIG. 2, which are not repeated in detail here.

At step 4107, a paging message is received on the target PO.

Regarding the optional implementation of step 4107, reference may be made to the optional implementation of step 2107 in FIG. 2, step 3107 in FIG. 3A and step 3203 in FIG. 3B, and other related parts of the embodiments involved in FIG. 2, FIG. 3A and FIG. 3B, which are not repeated in detail here.

At step 4108, a paging message is received on the legacy PO.

Regarding the optional implementation of step 4108, reference may be made to the optional implementation of step 2108 in FIG. 2 and step 3108 in FIG. 3A, and other related parts of the embodiments involved in FIG. 2 and FIG. 3A, which are not repeated in detail here.

The paging method involved in the embodiments of the present disclosure may include at least one of steps 4101 to 4108. For example, step 4101 may be implemented as an independent embodiment, step 4102 may be implemented as an independent embodiment, and so on, but the present disclosure is not limited thereto. Steps 4101+4106+4108, steps 4102+4103+4104+4105+4107, steps 4101+4102+4103+4104+4105+4106+4107+4108 may be implemented as independent embodiments, but the present disclosure is not limited to thereto.

In some embodiments, step 4101, step 4106, and step 4108 are optional, and one or more of these steps may be omitted or replaced in different embodiments.

FIG. 4B is a flowchart of a paging method according to an embodiment of the present disclosure. This embodiment of the present disclosure relates to a paging method, and the method includes the following steps.

At step 4201, a first LP-WUS is received.

Regarding the optional implementation of step 4201, reference may be made to the optional implementations of step 2102 in FIG. 2, step 3102 in FIG. 3A, step 3201 in FIG. 3B and step 4102 in FIG. 4A, and other related parts of the embodiments involved in FIG. 2, FIG. 3A, FIG. 3B and FIG. 4A, which are not repeated in detail here.

At step 4202, a target PO is determined.

Regarding the optional implementation of step 4202, reference may be made to the optional implementations of steps 2103, 2104 and 2105 in FIG. 2, steps 4103, 4104 and 4105 in FIG. 4A, and other related parts of the embodiments involved in FIG. 2 and FIG. 4A, which are not repeated in detail here.

At step 4203, a paging message is received on the target PO.

Regarding the optional implementation of step 4203, reference may be made to the optional implementation of step 2107 in FIG. 2, step 3107 in FIG. 3A, step 3203 in FIG. 3B and step 4107 in FIG. 4A, and other related parts of the embodiments involved in FIG. 2, FIG. 3A, FIG. 3B and FIG. 4A, which are not repeated in detail here.

In the embodiments of the present disclosure, step 4201 may be combined with step 4106 in FIG. 4A, and step 4202 may be combined with step 4102 or 4107 in FIG. 4A.

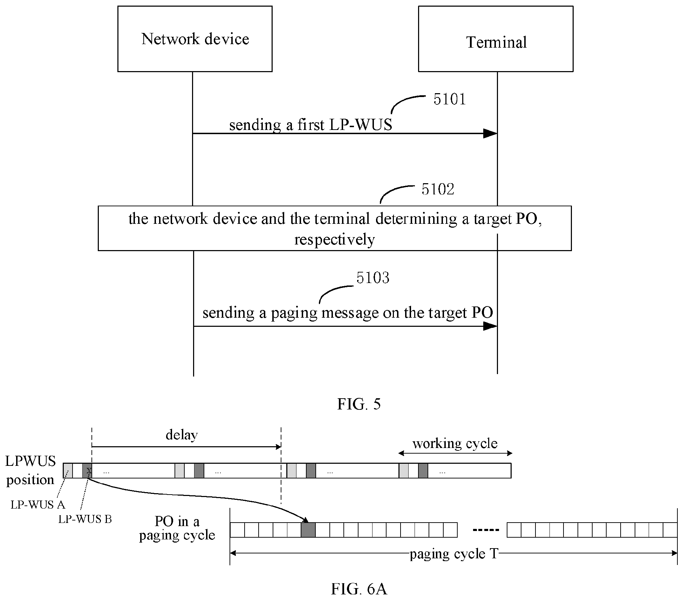

FIG. 5 is an interactive schematic diagram of a paging method according to an embodiment of the present disclosure. As shown in FIG. 5, this embodiment of the present disclosure relates to a paging method, and the method may include the following steps.

At step 5101, a first LP-WUS is sent to a terminal.

The first LP-WUS includes wake-up information for instructing the terminal to wake up the MR.

Regarding the optional implementation of step 5101, reference may be made to the optional implementation of step 2102 in FIG. 2, step 3102 in FIG. 3A, step 3201 in FIG. 3B, step 4102 in FIG. 4A and step 4201 in FIG. 4B, and other related parts of the embodiments involved in FIG. 2, FIG. 3A, FIG. 3B, FIG. 4A and FIG. 4B, which are not repeated in detail here.

At step 5102, the network device and the terminal determine a target PO based on the first LP-WUS, respectively.

Regarding the optional implementation of step 5102, reference may be made to the optional implementation of steps 2103, 2104 and 2105 in FIG. 2, steps 3103, 3104 and 3105 in FIG. 3A, step 3202 in FIG. 3B, steps 4103, 4104 and 4105 in FIG. 4A and step 4202 in FIG. 4B, and other related parts of the embodiments involved in FIG. 2, FIG. 3A and FIG. 3B, which are not repeated in detail here.

At step 5103, the network device sends a paging message to the terminal on the target PO.

Regarding the optional implementation of step 5103, reference may be made to the optional implementation of step 2107 in FIG. 2, step 3107 in FIG. 3A, step 3203 in FIG. 3B, step 4107 in FIG. 4A and step 4203 in FIG. 4B, and other related parts of the embodiments involved in FIG. 2, FIG. 3A, FIG. 3B, FIG. 4A and FIG. 4B, which are not repeated in detail here.

In some embodiments, the above method may include the method described in the above embodiments on the network device side, terminal side, etc., which will not be repeated here.

In the implementations or embodiments, unless there is any contradiction, each step may be independent, arbitrarily combined or exchanged in order, the optional implementations or optional embodiments may be arbitrarily combined, and may be arbitrarily combined with any steps of other implementations or other embodiments.

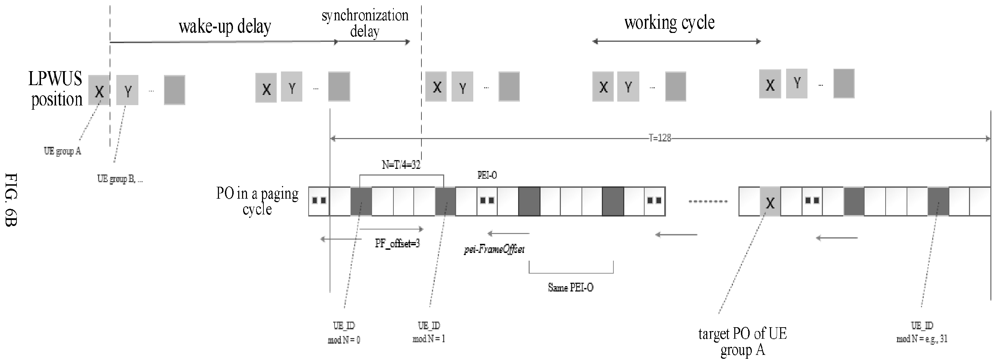

FIG. 6A and FIG. 6B each illustrate a schematic diagram of determining a target PO according to an embodiment of the present disclosure. As shown in FIG. 6A, a process of determining the target PO based on the LP-WUS directly is shown. FIG. 6B shows a process of determining the target PO based on the LP-WUS and a PEI. The method for determining the target PO includes the following five embodiments.

### Embodiment 1

A PF/PO associated with an LP-WUS may be the nearest one of PFs/POs configured via the system broadcasting that satisfy the delay D, thereby reducing a paging delay. Satisfying the delay D may mean that an interval from timing A to timing B is greater than or equal to D. A definition of the timing B depends on a specific method of associating the LP-WUS with the PF/PO, and the timing A may adopt one of the following definitions:
an end time point of the LP-WUS;
an end time point of the last time slot of the LP-WUS;
an end time point of the last sub-frame of the LP-WUS;
an end time point of the last radio frame of the LP-WUS;
an end time point of the last LP-WUS in an LP-WUS cycle where the LP-WUS is located;
an end time point of the last time slot of the last LP-WUS in an LP-WUS cycle where the LP-WUS is located;
an end time point of the last sub-frame of the last LP-WUS in an LP-WUS cycle where the LP-WUS is located;
an end time point of the last radio frame of the last LP-WUS in an LP-WUS cycle where the LP-WUS is located; or
an end time point of an LP-WUS cycle where the LP-WUS is located.

In a first way: for one LP-WUS, the associated PO is the first one satisfying the delay D of POs in the PF/PO set configured via the system broadcasting. Assuming that one PF includes multiple POs, the multiple POs may be associated with different LP-WUSs. One or more terminals configured with the same LP-WUS is(are) associated with the same PO in the PF/PO set configured via the system broadcasting.

The timing B may adopt one of the following definitions:
a start time point of the first one of POs that satisfies the delay D;
a start time point of a start time slot of the first one of POs that satisfies the delay D;
a start time point of a start sub-frame of the first one of POs that satisfies the delay D;
a start time point of a start radio frame of the first one of POs that satisfies the delay D.

In a second way: for one LP-WUS, the associated PF is the first PF satisfying the delay D in the PF set configured via the system broadcasting. One or more terminals configured with the same LP-WUS is(are) associated with the same PF in the PF/PO set configured via the system broadcasting.

The timing B may refer to one of the following definitions:
a start time point of the first one of PFs that satisfies the delay D;
a start time point of a start time slot of the first one of PFs that satisfies the delay D;
a start time point of a start sub-frame of the first one of PFs that satisfies the delay D;
a start time point of a start radio frame the first one of PFs that satisfies the delay D.

The method for determining the PO may be any of the following:
for a terminal detecting the LP-WUS, an index of the PO detected by the terminal in the associated PF is still i_s=floor(UE_ID/*N*) mod *Nₛ*;
or for a terminal detecting the LP-WUS, an index of the PO detected by the terminal in the associated PF is i_s =0;
or for a terminal detecting the LP-WUS, an index of the PO detected by the terminal in the associated PF may be determined according to a position, in the wake-up information carried by the LP-WUS, of a wake-up information bit of the terminal. For example, assuming that each PO is divided into *G* paging subgroups, an index of the PO to which the k-th bit of the LP-WUS information is mapped may be $\left⌊k/G\right⌋$*.*

In a third way: for an LP-WUS, its associated POs are first *n* POs satisfying the delay D in the PO set configured via the system broadcasting, where *n* is greater than or equal to 1. For example, $n \leq \left⌊N⋅{N}_{s}⋅{T}_{lpwus}/T\right⌋$*.* For a terminal detecting the LP-WUS, one PO is detected in the above n POs.

The timing B may adopt one of the following definitions:
a start time point of the first one among the first *n* POs that satisfy the delay D;
a start time point of a start time slot of the first one among the first *n* POs that satisfy the delay D;
a start time point of a start sub-frame of the first one among the first *n* POs that satisfy the delay D;
a start time point of a start radio frame of the first one among the first *n* POs that satisfy the delay D.

The method for determining the PO may be any of the following:
for a terminal detecting the LP-WUS, an index of the detected PO in the above *n* POs may be UE_ID mod *n*;
or for a terminal detecting the LP-WUS, an index of the PO detected by the terminal in the above *n* POs may be determined according to a position, in the wake-up information carried by the LP-WUS, of a wake-up information bit of the terminal. For example, assuming that each PO is divided into *G* paging subgroups, an index of the PO to which the k-th bit of the LP-WUS information is mapped may be $\left⌊k/G\right⌋$.

In a fourth way: for an LP-WUS, its associated PFs are first *n* PFs satisfying the delay D in the PF set configured via the system broadcasting, where $1 \leq n \leq N ⋅ \left⌊{T}_{lpwus}/T\right⌋$*.* For example, *n*=2. For a terminal detecting the LP-WUS, one PO of one PF is detected in the above *n* PFs.

The timing B may adopt one of the following definitions:
a start time point of the first one among the first *n* PFs that satisfy the delay D;
a start time point of a start time slot of the first one among the first *n* PFs that satisfy the delay D;
a start time point of a start sub-frame of the first one among the first *n* PFs that satisfy the delay D;
a start time point of a start radio frame of the first one among the first *n* PFs that satisfy the delay D.

The method for determining the PO may be any of the following:
for example, for a terminal detecting the LP-WUS, an index of the detected PF in the above *n* PFs may be UE_ID mod *n*, and an index of the detected PO in the PF is still i_s=floor(UE_ID/*N*) mod *Nₛ*;
or for a terminal detecting the LP-WUS, an index of the PO detected by the terminal in the above *n* PFs may be determined according to a position, in the wake-up information carried by the LP-WUS, of a wake-up information bit of the terminal. For example, assuming that each PO is divided into *G* paging subgroups, an index of the PO to which the k-th bit of the LP-WUS information is mapped may be $\left⌊k/G\right⌋$*.*

### Embodiment 2

In the PF/PO set configured via the system broadcasting, the PFs within a paging cycle are equally divided into *N*/*P* groups, each group contains *P* adjacent PFs. For example, a PEI indicates paging subgroup information of *P* PFs. The PFs/POs associated with an LP-WUS may be the first group of PFs that satisfy the delay D. Satisfying the delay D may mean that an interval from timing A to timing B is greater than or equal to D.

The timing A may adopt one of the following definitions:
an end time point of the LP-WUS;
an end time point of the last time slot of the LP-WUS;
an end time point of the last sub-frame of the LP-WUS;
an end time point of the last radio frame of the LP-WUS;
an end time point of the last LP-WUS in an LP-WUS cycle where the LP-WUS is located;
an end time point of the last time slot of the last LP-WUS in an LP-WUS cycle where the LP-WUS is located;
an end time point of the last sub-frame of the last LP-WUS in an LP-WUS cycle where the LP-WUS is located;
an end time point of the last radio frame of the last LP-WUS in an LP-WUS cycle where the LP-WUS is located; or
an end time point of an LP-WUS cycle where the LP-WUS is located.

The timing B may adopt one of the following definitions:
a start time point of the first one among *P* PFs;
a start time point of the first time slot of the first one among *P* PFs;
a start time point of the first sub-frame of the first one among *P* PFs;
a start time point of the first radio frame of the first one among *P* PFs.

The delay D may include the above-mentioned wake-up delay X, synchronization time Y, delay from the PEI configured via the system broadcasting to the associated PF/PO, and other processing delays. Accordingly, after receiving the wake-up information of the LP-WUS, the terminal may first detect the PEI to further determine whether it is required to detect the paging information. When the PEI indicates all the paging subgroups of the terminal, the terminal further detects the paging information. Alternatively, the delay D may include the above-mentioned wake-up delay X, synchronization time Y and other processing delays. Accordingly, after receiving the wake-up information of the LP-WUS, the terminal may further detect the paging information directly at the corresponding PO.

The method for determining the PO may be any of the following:
for a terminal detecting the above LP-WUS, the following method may also be used to determine its associated PF/PO: for a terminal detecting the above LP-WUS, an index of the detected PF in the *P* PFs may be UE_ID mod *P*, and an index of the PO detected in the PF is still i_s=floor(UE_ID/N) mod *Nₛ*;
or for a terminal detecting the above LP-WUS, an index of the detected PF in the *P* PFs may be mod(UE_ID, P) , and an index of the PO detected in the PF may be $mod \left(\left⌊UE_ID/P\right⌋, {N}_{s}\right)$;
or for a terminal detecting the above LP-WUS, an index of the detected PO in all POs of the P PFs may be UE_ID mod(*P***Nₛ*).

### Embodiment 3

**M** LP-WUSs in one LP-WUS cycle may be associated with *P* adjacent PFs in the PF/PO set configured via the system broadcasting. For example, *P* = *N* · *T_{lpwus}*/*T*. *P* is the number of PFs in the time period of the corresponding LP-WUS cycle on the above PF/PO set. The *P* PFs may be first *P* PFs that satisfy the delay D in the PF set configured via the system broadcasting. Alternatively, within the PF/PO set configured via the system broadcasting, the PFs within one paging cycle are equally divided into *T* /*T_{lpwus}* groups, that is, each group contains *P* adjacent PFs, and the *P* PFs may be the first group of PFs that satisfy the delay D in the PF set configured via the system broadcasting. For example, the PF grouping may be implemented by taking a radio frame with SFN equal to 0 as a starting point of a group of PFs. The M LP-WUSs in one LP-WUS cycle may be evenly associated with the *P* PFs.

Satisfying the delay D may mean that an interval from timing A to timing B is greater than or equal to D. The timing A may adopt one of the following definitions:
an end time point of the last LP-WUS in the LP-WUS cycle where the LP-WUS is located;
an end time point of the last time slot of the last LP-WUS in the LP-WUS cycle where the LP-WUS is located;
an end time point of the last sub-frame of the last LP-WUS in the LP-WUS cycle where the LP-WUS is located;
an end time point of the last radio frame of the last LP-WUS in the LP-WUS cycle where the LP-WUS is located; or
an end time point of the LP-WUS cycle where the LP-WUS is located.

### First way

For one LP-WUS, its associated PO is the first one of POs in the *P* PFs. Assuming that one PF includes multiple POs, the multiple POs may be associated with different LP-WUSs. One or more terminals configured with the same LP-WUS is(are) associated with the same PO in the *P* PFs.

The timing B may adopt one of the following definitions:
a start time point of the first one among the *P* PFs;
a start time point of the first time slot of the first one among the *P* PFs;
a start time point of the first sub-frame of the first one among the *P* PFs;
a start time point of the first radio frame of the first one among the *P* PFs.

The method for determining the PO may be any of the following:
an index of an LP-WUS in an LP-WUS cycle is denoted as *m,* where *m* = 0,1, ... M - **1,** and then, the LP-WUS may be associated with an index of the PO in the above *P* PFs $\left⌊m\left(P⋅{N}_{s}\right)/M\right⌋$ or *m* mod (*P***Nₛ*);
or an index of the PF associated with the LP-WUS in the above *P* PFs may be $\left⌊mP/M\right⌋$ or *m* mod *P*; and an index of the PO detected by the terminal in the PF may be still i_s = floor (UE_ID/N) mod *Nₛ*.

### Second way

For one LP-WUS, its associated POs are multiple POs in one PF among the *P* PFs. One or more terminals configured with the same LP-WUS is(are) associated with the same PF among the *P* PFs.

The timing B may adopt one of the following definitions:
a start time point of the multiple POs in one PF;
a start time point of the first time slot of the multiple POs in one PF;
a start time point of the first sub-frame of the multiple POs in one PF; or
a start time point of the first radio frame of the multiple POs in one PF.

The method for determining the PO may be any of the following:
an index of an LP-WUS in an LP-WUS cycle is denoted as *m*, an index of the PF associated with the LP-WUS in the above *P* PFs may be $\left⌊mP/M\right⌋$ or *m* mod *P*, and an index of the PO detected by the terminal in the PF may be still i_s = floor (UE_ID/N) mod *Nₛ*;
or assuming that each PO is divided into *G* paging subgroups, an index of the PO in the associated PF to which the k-th bit of the LP-WUS information is mapped may be $\left⌊k/G\right⌋$.

Third way: for one LP-WUS, its associated POs are *n* POs in the *P* PFs, where *n* is greater than or equal to 1. For example, *n* ≤ *P* · *Nₛ*. For a terminal detecting the LP-WUS, one PO is detected among the *n* POs.

The timing B may adopt one of the following definitions:
a start time point of one PO among the *n* POs;
a start time point of the first time slot of one PO among the *n* POs;
a start time point of the first sub-frame of one PO among the *n* POs;
a start time point of the first radio frame of one PO among the *n* POs.

The method for determining the PO may be as follows:
an index of an LP-WUS in an LP-WUS cycle may be denoted as *m*, then an index of a starting PO among the *n* POs associated with the LP-WUS in the above *P* PFs may be $k = \left⌊m\left(P⋅{N}_{s}\right)/M\right⌋$ or *k = m* mod (*P***Nₛ*); indices of the *n* POs in the above *P* PFs may be *mod*(*k* + *i,P* · *Nₛ*), where *i =* 0,1, *... n -* 1; assuming that each PO is divided into *G* paging subgroups, an index of the PO among the associated *n* POs to which the k-th bit of the LP-WUS information is mapped may be $\left⌊k/G\right⌋$.

Fourth way: for an LP-WUS, its associated PFs are *n* PFs in the PF set configured via the system broadcasting, where 1 ≤ *n* ≤ *P.* For example, *n=2.* For a terminal detecting the LP-WUS, one PO in one PF is detected in the above *n* PFs.

The timing B may adopt one of the following definitions:
a start time point of one PO in one PF;
a start time point of the first time slot of one PO in one PF;
a start time point of the first sub-frame of one PO in one PF;
a start time point of the first radio frame of one PO in one PF.

The method for determining the PO may be as follows:
an index of an LP-WUS in an LP-WUS cycle may be denoted as *m,* then an index of a starting PF among the *n* PFs associated with the LP-WUS in the above P PFs may be $k = \left⌊mP/M\right⌋$ or *k* = *m* mod *P*; indices of the *n* PFs in the above *P* PFs may be *mod*(*k* + *i, P*), where *i* = 0,1, ... *n* - 1; and an index of the PO detected by the terminal in the PF may be still i_s = floor (UE_ID/N) mod *Nₛ*;
or assuming that each PO is divided into *G* paging subgroups, an index of the PO in the associated *n* PFs to which the k-th bit of the LP-WUS information is mapped may be $\left⌊k/G\right⌋$.

Using the above four ways, for a terminal detecting the LP-WUS, the following method may also be used to determine its associated PF/PO. For a terminal detecting the LP-WUS, an index of the detected PF in the *P* PFs may be UE_ID mod *P*, and an index of the PO detected in the PF may be still i_s=floor(UE_ID/*N*)mod *Nₛ*. Alternatively, for a terminal detecting the LP-WUS, the index of the detected PF in the *P* PFs may be mod(UE_ID, *P*), and the index of the PO detected in the PF may be $mod \left(\left⌊UE_ID/P\right⌋, {N}_{s}\right)$. Alternatively, for a terminal detecting the LP-WUS, the index of the detected PO in all POs of the *P* PFs may be UE_ID mod(*P***Nₛ*).

### Embodiment 4

In the PF/PO set configured via the system broadcasting, the PFs in a paging cycle are equally divided into *N*/*P* groups, and each group contains *P* adjacent PFs. For example, a PEI indicates paging subgroup information of the *P* PFs. M LP-WUSs in an LP-WUS cycle may be associated with the first group of PFs that satisfy the delay D. Satisfying the delay D may mean that an interval from timing A to timing B is greater than or equal to D. The timing A may adopt one of the following definitions:
an end time point of the last LP-WUS in the LP-WUS cycle where the LP-WUS is located;
an end time point of the last time slot of the last LP-WUS in the LP-WUS cycle where the LP-WUS is located;
an end time point of the last sub-frame of the last LP-WUS in the LP-WUS cycle where the LP-WUS is located;
an end time point of the last radio frame of the last LP-WUS in the LP-WUS cycle where the LP-WUS is located; or
an end time point of the LP-WUS cycle where the LP-WUS is located.

The delay D may include the above-mentioned wake-up delay X, synchronization time Y, delay from the PEI configured via the system broadcasting to the associated PF/PO, and other processing delays. Accordingly, after receiving the wake-up information of the LP-WUS, the terminal may first detect the PEI to further determine whether it is required to detect the paging information. When the PEI indicates all the paging subgroups of the terminal, the terminal further detects the paging information. Alternatively, the delay D may include the above-mentioned wake-up delay X, synchronization time Y and other processing delays. Accordingly, after receiving the wake-up information of the LP-WUS, the terminal may further detect the paging information directly at the corresponding PO.

For a terminal detecting the LP-WUS, the following method may also be used to determine its associated PF/PO:

**For** a terminal detecting the LP-WUS, the index of the detected PF in the *P* PFs may be UE_ID mod *P*, and the index of the PO detected in the PF is still i_s=floor(UE_ID/*N*) mod *Nₛ*.

Alternatively, for a terminal detecting the LP-WUS, the index of the detected PF in the *P* PFs may be mod(UE_ID, *P*), and the index of the PO detected in the PF may be $mod \left(\left⌊UE_ID/P\right⌋, {N}_{s}\right)$.

Alternatively, for a terminal detecting the LP-WUS, the index of the detected PO in all POs of the *P* PFs may be UE_ID mod (*P***Nₛ*).

Alternatively, an index of an LP-WUS in an LP-WUS cycle may be denoted as *m,* and a starting index of the PF associated with the LP-WUS in the above *P* PFs may be $\left⌊mP/M\right⌋$ or *m* mod *P*. An index of the PO detected by the terminal in the PF may be still i_s = floor (UE_ID/N) mod *Nₛ*. Alternatively, assuming that each PO is divided into *G* paging subgroups, an index of the PO in the associated PF to which the k-th bit of the LP-WUS information is mapped may be $\left⌊k/G\right⌋$.

### Embodiment 5

A short paging cycle is introduced into the PF/PO set configured via the system broadcasting. A PF/PO of a short paging cycle that satisfies the delay D is associated with an LP-WUS. The paging cycle is T, and the number of PFs in a paging cycle is *N.* The paging cycle T may be divided into K short paging cycles T/K, and each short paging cycle T/K includes *P*=*N*/*K* PFs. Each PF includes *Nₛ* POs according to the configuration via the system broadcasting. When the PEI is configured, the PEI in each paging cycle T is also divided into K short paging cycles T/K accordingly. An association relationship between the PEI and the PF/PO remains unchanged. The PF/PO mapped by each UE ID in the short paging cycle is defined. Accordingly, the number of PF/POs of the terminal within time T increases to K.

For a terminal detecting the LP-WUS, its associated PF/PO is the nearest PF/PO satisfying the delay D allocated to the terminal according to the short paging cycle. Satisfying the delay D may mean that an interval from timing A to timing B is greater than or equal to D. The timing A may adopt one of the following definitions:
an end time point of the LP-WUS;
an end time point of the last time slot of the LP-WUS;
an end time point of the last sub-frame of the LP-WUS;
an end time point of the last radio frame of the LP-WUS;
an end time point of the last LP-WUS in the LP-WUS cycle where the LP-WUS is located;
an end time point of the last time slot of the last LP-WUS where the LP-WUS is located;
an end time point of the last sub-frame of the last LP-WUS in the LP-WUS cycle where the LP-WUS is located;
an end time point of the last radio frame of the last LP-WUS in the LP-WUS cycle where the LP-WUS is located; or
an end time point of the LP-WUS cycle where the LP-WUS is located.

The timing B may adopt one of the following definitions:
a start time point of the first PO (i.e., the first one of POs) that satisfies the delay D;
a start time point of a start time slot of the first PO that satisfies the delay D;
a start time point of a start sub-frame of the first PO that satisfies the delay D;
a start time point of a start radio frame of the first PO that satisfies the delay D;
a start time point of the first PF (i.e., the first one of PFs) that satisfies the delay D;
a start time point of the PEI associated with the first PF that satisfies the delay D;
a start time point of the first time slot of the PEI associated with the first PF that satisfies the delay D;
a start time point of the first sub-frame of the PEI associated with the first PF that satisfies the delay D;
a start time point of the first radio frame of the PEI associated with the first PF that satisfies the delay D;
a start time point of the short paging cycle where the first PO that satisfies the delay D is located; or
a start time point of the short paging cycle where the first PF that satisfies the delay D is located.

For a terminal detecting the LP-WUS, the following method may be used to determine the PF/PO mapped in the short paging cycle according to its UE ID. An index of the PF associated with the UE ID in the short paging cycle may be UE_ID mod *P*, and an index of the PO detected in the PF is still i_s=floor(UE _ID/*N*)mod *Nₛ*. Alternatively, an index of the PF associated with the UE ID in the short paging cycle may be *mod*(UE_ID, *P*), and an index of the PO detected in the PF may be $mod \left(\left⌊UE_ID/P\right⌋, {N}_{s}\right)$. Alternatively, an index, in the short paging cycle, of the PO associated with the UE ID in the short paging cycle may be UE_ID mod(*P***Nₛ*).

In the embodiments of the present disclosure, part or all of the steps and their optional implementations may be arbitrarily combined with part or all of the steps in other embodiments, and may also be arbitrarily combined with optional implementations of other embodiments.

The embodiments of the present disclosure also propose an apparatus for implementing any of the above methods, for example, an apparatus is proposed, the above apparatus includes units or modules for implementing various steps performed by the terminal in any of the above methods. For another example, another apparatus is proposed, including units or modules for implementing various steps performed by the network device (such as an access network device, a core network function node, a core network device, etc.) in any of the above methods.

**It** should be understood that the division of the units or modules in the above apparatus is only a division of logical functions, and in an actual implementation, they may be fully or partially integrated into one physical entity, or they may be physically separated. In addition, the units or modules in the apparatus can be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the device or a memory outside the device. Alternatively, the units or modules in the apparatus can be implemented in the form of hardware circuits, and the functions of some or all of the units or modules can be realized by designing the hardware circuits. The above hardware circuits can be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit can be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units or modules. All units or modules of the above apparatuses can be realized in the form of a processor calling software, or in the form of a hardware circuit, or in part by a processor calling software, and the rest by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

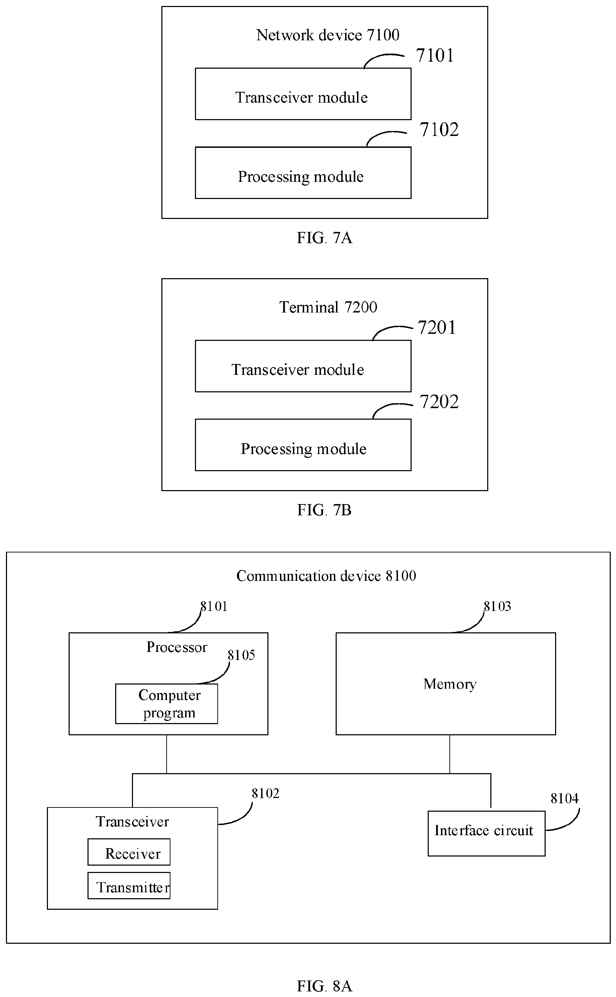

**FIG.** 7A is a schematic diagram of a network device provided in an embodiment of the present disclosure. As shown in FIG. 7A, the network device 7100 includes a transceiver module 7101 and a processing module 7102. In some embodiments, the transceiver module is configured to send a first low power wake-up signal (LP-WUS) to a terminal, in which the first LP-WUS includes wake-up information for instructing the terminal to wake up a main radio (MR). The processing module is configured to determine a target paging occasion (PO) within a paging cycle based on the first LP-WUS. The transceiver module is configured to send a paging message to the terminal on the target PO.

Optionally, the above transceiver module is configured to execute at least one of communication steps (such as step 2101, step 2102, step 2107, step 2108, step 3101, step 3102, step 3107, step 3108, step 3201, step 3203, which is not limited herein) related to "receiving and/or sending" performed by the network device 7100 in any of the above methods, which is not repeated here.

Optionally, the above processing module is configured to execute at least one of other steps (such as step 2103, step 2104, step 2105, step 2106, step 3103, step 3104, step 3105, step 3106, step 3202, which is not limited herein) performed by the network device 7100 in any of the above methods, which is not repeated here.

**FIG.** 7B is a schematic diagram of a terminal provided in an embodiment of the present disclosure. As shown in FIG. 7B, the terminal 7200 may include a transceiver module 7201 or a processing module 7202. In some embodiments, the transceiver module is configured to receive a first low power wake-up signal (LP-WUS) sent by a network device, in which the first LP-WUS includes wake-up information for instructing the terminal to wake up a main radio (MR). The processing module is configured to determine a target paging occasion (PO) within a paging cycle based on the first LP-WUS. The transceiver module is configured to receive a paging message sent by the network device on the target PO.

Optionally, the above transceiver module is configured to execute at least one of communication steps (such as step 2101, step 2102, step 2107, step 2108, step 4101, step 4102, step 4107, step 4108, step 4201, step 4203, which is not limited herein) related to "receiving and/or sending" performed by the terminal 7200 in any of the above methods, which is not repeated here.

Optionally, the above processing module is configured to execute at least one of other steps (such as step 2103, step 2104, step 2105, step 2106, step 4103, step 4104, step 4105, step 4106, step 4202,which is not limited herein) performed by the terminal 7200 in any of the above methods, which is not repeated here.

In some embodiments, the transceiver module may include a sending module and/or a receiving module, and the sending module and the receiving module may be separate or integrated. Optionally, the transceiver module may be interchangeable with the transceiver.

**FIG.** 8A is a schematic diagram of a communication device 8100 provided in an embodiment of the present disclosure. The communication device 8100 may be a network device (e.g., an access network device, a core network device, etc.), or a terminal (e.g., a user equipment, etc.), or a chip, a chip system, or a processor that supports a network device to implement any of the above methods, or a chip, a chip system, or a processor that supports a terminal to implement any of the above methods. The communication device 8100 may be used to implement the method described in the above method embodiments, and for details, reference may be made to the description in the above method embodiments.

As shown in FIG. 8A, the communication device 8100 includes one or more processors 8101. The processor 8101 may be a general-purpose processor or a dedicated processor, for example, a baseband processor or a central processing unit. The baseband processor may be used to process a communication protocol and communication data, and the central processing unit may be used to control the communication apparatus (such as a base station, a baseband chip, a terminal, a terminal chip, a DU or a CU, etc.) to execute a program and process data of the program. Alternatively, the communication device 8100 is configured to execute any of the above methods. Alternatively, the processor 8101 is configured to call instructions to cause the communication device 8100 to execute any of the above methods.

In some embodiments, the communication device 8100 further includes one or more transceivers 8102. When the communication device 8100 includes one or more transceivers 8102, at least one of the communication steps (such as step 2101, step 2102, step 2107, step 2108, step 3101, step 3102, step 3107, step 3108, step 3201, step 3203, step 4101, step 4102, step 4107, step 4108, step 4201, step 4203, which is not limited herein) such as sending and/or receiving in the above methods is performed by the transceiver 8102, and at least one of the other steps (such as step 2103, step 2104, step 2105, step 2106, step 3103, step 3104, step 3105, step 3106, step 3202, step 4103, step 4104, step 4105, step 4106, step 4202, which is not limited herein) is performed by the processor 8101.In some embodiments, the transceiver may include a receiver and a transmitter, and the receiver and/or the transmitter may be separate or integrated. Optionally, the terms such as "transceiver", "transceiver unit", "transceiver machine", "transceiver circuit", etc. may be exchangeable with each other, the terms such as "transmitter", "transmitting unit", "transmitting machine", "transmitting circuit", etc. may be exchangeable with each other, and the terms such as "receiver", "receiving unit", "receiver", "receiving circuit", etc. may be exchangeable with each other.

In some embodiments, the communication device 8100 further includes one or more memories 8103 for storing instructions. Optionally, all or part of the memory 8103 may be outside the communication device 8100. Optionally, the communication device 8100 further includes one or more interface circuits 8104, which are connected to the memory 8102. Optionally, the interface circuit 8104 may be used to receive data from the memory 8102 or other apparatuses, and may be used to send data to the memory 8102 or other apparatuses. For example, the interface circuit 8104 may read data stored in the memory 8102 and send the data to the processor 8101.

In some embodiments, the processor 8101 may store the computer program 8105. The computer program 8105 is executed on the processor 8101, the communication device 8000 is caused to execute any of the above methods. The computer program 8105 may be solidified in the processor 8101, in which case the processor 8101 may be implemented by hardware.

The communication device 8100 described in the above embodiments may be the network device or the terminal, but the scope of the communication device 8100 described in the present disclosure is not limited thereto, and the structure of the communication device 8100 may not be limited by FIG. 8A. The communication device may be an independent device or may be part of a larger device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

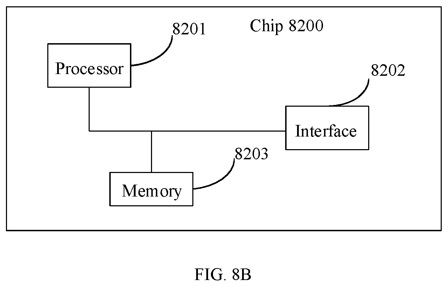

**FIG.** 8B is a schematic diagram of a chip 8200 proposed in an embodiment of the present disclosure. In case where the communication device 8100 may be a chip or a chip system, reference may be made to the schematic diagram of the chip 8200 shown in FIG. 8B, but the present disclosure is not limited thereto.

The chip 8200 includes one or more processors 8201, and the chip 8200 is used to execute any of the above methods.

In some embodiments, the chip 8200 further includes one or more interface circuits 8202. Optionally, the terms such as "interface circuit", "interface", "transceiver pin" may be exchangeable with each other. In some embodiments, the chip 8200 further includes one or more memories 8203 for storing data. Optionally, all or part of the memory 8203 may be outside the chip 8200. Optionally, the interface circuit 8202 is connected to the memory 803, and may be used to receive data from the memory 8203 or other apparatuses, and the interface circuit 8202 may be used to send data to the memory 8203 or other apparatuses. For example, the interface circuit 8202 may read data stored in the memory 8203 and send the data to the processor 8201.

In some embodiments, the interface circuit 8202 performs at least one of the communication steps (for example, step 2101, step 2102, step 2107, step 2108, step 3101, step 3102, step 3107, step 3108, step 3201, step 3203, step 4101, step 4102, step 4107, step 4108, step 4201, step 4203, which is not limited herein) such as "sending and/or receiving" in the above method. The interface circuit 8202 performs the communication steps such as sending and/or receiving in the above method, for example, means that the interface circuit 8202 performs data interaction between the processor 8201, the chip 8200, the memory 8203, or the transceiver device. In some embodiments, the processor 8201 performs at least one of the other steps (for example, step 2103, step 2104, step 2105, step 2106, step 3103, step 3104, step 3105, step 3106, step 3202, step 4103, step 4104, step 4105, step 4106, step 4202,which is not limited herein).

The modules and/or devices described in the embodiments such as virtual devices, physical devices, chips, etc. can be combined or separated as needed. Optionally, some or all steps can also be performed by multiple modules and/or devices in collaboration, which is not limited here.

The present disclosure also proposes a storage medium, on which instructions are stored, and when the instructions are executed on the communication device 8100, the communication device 8100 executes any of the above methods. Optionally, the storage medium is an electronic storage medium. Optionally, the storage medium is a computer-readable storage medium, but is not limited to thereto, and it may also be a storage medium readable by other apparatuses. Optionally, the storage medium may be a non-transitory storage medium, but is not limited to thereto, and it can also be a temporary storage medium.

The present disclosure also provides a program product, which, when executed by the communication device 8100, enables the communication device 8100 to execute any of the above methods. Optionally, the program product is a computer program product.

The present disclosure also provides a computer program, which, when executed on a computer, causes the computer to execute any one of the above methods.

## Claims

1. A paging method, performed by a network device, comprising:
sending a first low power wake-up signal (LP-WUS) to a terminal, wherein the first LP-WUS comprises wake-up information for instructing the terminal to wake up a main radio (MR);
determining a target paging occasion (PO) within a paging cycle based on the first LP-WUS; and
sending a paging message to the terminal on the target PO.

2. The method according to claim 1, further comprising:
broadcasting paging configuration information to the terminal via system broadcasting,
wherein the paging configuration information comprises the paging cycle, and the paging configuration information is used to determine a paging set, the paging set comprises *N* paging frames (PFs) within the paging cycle, and each PF comprises *Nₛ* POs.

3. The method according to claim 2, further comprising:
determining, according to an identifier of the terminal, *N*, the paging cycle, and a radio frame offset, a PF where a legacy PO is located;
determining the legacy PO according to the identifier of the terminal, *N,* and *Nₛ*; and
sending the paging message to the terminal on the legacy PO.

4. The method according to claim 2 or 3, wherein determining the target PO within the paging cycle based on the first LP-WUS comprises:
determining a first delay based on the LP-WUS;
determining a first timing, wherein the first timing is associated with the LP-WUS; and
determining a PO that meets a preset condition within the paging cycle as the target PO, wherein the preset condition comprises an interval between a second timing associated with the target PO and the first timing being greater than or equal to the first delay.

5. The method according to claim 4, wherein the first delay comprises at least one of:
a time duration required for the terminal to wake up the MR;
a time duration required for the terminal to complete time-frequency synchronization on the MR;
a time duration between a paging early indication (PEI) configured via the system broadcasting and a PF/PO associated with the PEI; or
a time duration for the terminal to prepare to monitor the paging message.

6. The method according to claim 4, wherein the first timing is any one of:
an end time point of a last symbol of a channel of the first LP-WUS;
an end time point of a last time slot of the first LP-WUS;
an end time point of a last sub-frame of the first LP-WUS;
an end time point of a last radio frame of the first LP-WUS;
an end time point of a last symbol of a channel of a second LP-WUS, wherein the second LP-WUS is a last LP-WUS in an LP-WUS cycle where the first LP-WUS is located;
an end time point of a last time slot of a second LP-WUS;
an end time point of a last sub-frame of a second LP-WUS;
an end time point of a last radio frame of a second LP-WUS; or
an end time point of an LP-WUS cycle where the first LP-WUS is located.

7. The method according to any one of claims 4-6, wherein determining the PO that meets the preset condition within the paging cycle as the target PO comprises:
determining a first PO as the target PO, wherein the first PO is a first one of POs after the first delay.

8. The method according to claim 7, wherein the second timing comprises any one of:
a start time point of a first symbol of the first PO;
a start time point of a first time slot of the first PO;
a start time point of a first sub-frame of the first PO; or
a start time point of a first radio frame of the first PO.

9. The method according to any one of claims 4-6, wherein determining the PO that meets the preset condition within the paging cycle as the target PO comprises:
determining a first PF, wherein the first PF is a first one of PFs after the first delay; and
determining the target PO from the first PF.

10. The method according to claim 9, wherein the second timing is a start time point of the first PF.

11. The method according to claim 9 or 10, wherein determining the target PO from the first PF comprises any one of:
determining the target PO according to a number of POs comprised in the first PF and an identifier of the terminal;
determining a first one of POs in the first PF as the target PO; or
determining the target PO from the first PF according to a bit position, in the first LP-WUS, of the wake-up information for instructing the terminal to wake up the MR.

12. The method according to claim 11, wherein determining the target PO according to the bit position, in the first LP-WUS, of the wake-up information for instructing the terminal to wake up the MR comprises:
determining, according to the bit position and a number of a plurality of paging subgroups comprised in each PO within the paging cycle, a PO where the bit position is located in the first PF; and
determining the PO as the target PO.

13. The method according to any one of claims 4-6, wherein determining the PO that meets the preset condition within the paging cycle as the target PO comprises:
determining a second PO as the target PO, wherein the second PO is one PO among first *n* POs after the first delay, where $2 \leq n \leq \left⌊N⋅{N}_{s}⋅{T}_{lpwus}/T\right⌋$, *T_{lpwus}* is an LP-WUS cycle, *T* is the paging cycle, *N* is a number of PFs comprised in the paging cycle, *Nₛ* is a number of POs comprised in each PF.

14. The method according to claim 13, wherein the second timing is any one of:
a start time point of a first symbol of a first one of the first *n* POs;
a start time point of a first time slot of a first one of the first *n* POs;
a start time point of a first sub-frame of a first one of the first *n* POs; or
a start time point of a first radio frame of a first one of the first *n* POs.

15. The method according to claim 13 or 14, wherein the second PO is any one of:
a first one of the first *n* POs;
a PO determined from the first *n* POs according to *n* and an identifier of the terminal; or
a PO determined from the first *n* POs according to a bit position, in the first LP-WUS, of the wake-up information for instructing the terminal to wake up the MR, and a number of a plurality of paging subgroups comprised in each PO within the paging cycle.

16. The method according to any one of claims 4-6, wherein determining the PO that meets the preset condition within the paging cycle as the target PO comprises:
determining the target PO from first *m* PFs after the first delay, where $2 \leq m \leq \left⌊N⋅{T}_{lpwus}/T\right⌋$ , *T_{lpwus}* is an LP-WUS cycle, *T* is the paging cycle, *N* is a number of PFs comprised in the paging cycle.

17. The method according to claim 16, wherein the second timing is a start time point of a first one of the first *m* PFs.

18. The method according to claim 16 or 17, wherein determining the target PO from the first *m* PFs after the first delay comprises any one of:
determining a second PF, wherein the second PF is a first one of the first *m* PFs after the first delay, or the second PF is a PF determined from the first *m* PFs according to *m* and an identifier of the terminal; and determining the target PO from the second PF according to a number of POs comprised in the second PF, the number of PFs comprised in the paging cycle, and the identifier of the terminal; or
determining, according to the bit position, in the first LP-WUS, of the wake-up information for instructing the terminal to wake up the MR, and a number of a plurality of paging subgroups comprised in each PO within the paging cycle, a PO where the bit position is located in the first *m* PFs as the target PO.

19. The method according to any one of claims 4-6, wherein determining the PO that meets the preset condition within the paging cycle as the target PO comprises:
determining the target PO from a first PF group;
wherein the first LP-WUS is associated with the first PF group, the first PF group is a first one of PF groups after the first delay, the paging cycle comprises *N*/*P* PF groups, and each PF group comprises *P* PFs.

20. The method according to claim 19, wherein the second timing is a start time point of a first one of PFs in the first PF group.

21. The method according to claim 19 or 20, wherein determining the target PO from the first PF group comprises any one of:
determining a third PF, wherein the third PF is a first one of PFs in the first PF group, or the third PF is a PF determined from the first PF group according to *P* and an identifier of the terminal; and determining the target PO from the third PF according to a number of POs comprised in the third PF, a number of PFs comprised in the paging cycle, and the identifier of the terminal; or
determining the target PO from the *P* PFs in the first PF group according to *P,* a number of POs comprised in each PF and the identifier of the terminal.

22. The method according to any one of claims 4-5, wherein determining the PO that meets the preset condition within the paging cycle as the target PO comprises:
determining the target PO from *Q* PFs after the first delay, wherein an LP-WUS cycle where the first LP-WUS is located comprises M LP-WUSs, and the M LP-WUSs are associated with *Q* PFs in the paging set, *Q = N* · *T_{lpwus}*/*T*, where *T_{lpwus}* is the LP-WUS cycle, and *T* is the paging cycle; or
determining the target PO from a first one of PF groups after the first delay, wherein the paging cycle comprises *N*/*Q* PF groups, and each PF group comprises *Q* PFs.

23. The method according to claim 22, wherein the first timing is any one of:
an end time point of a last symbol of a channel of a second LP-WUS, wherein the second LP-WUS is a last LP-WUS in the LP-WUS cycle where the first LP-WUS is located;
an end time point of a last time slot of a second LP-WUS;
an end time point of a last sub-frame of a second LP-WUS;
an end time point of a last radio frame of a second LP-WUS; or
an end time point of the LP-WUS cycle where the first LP-WUS is located.

24. The method according to claim 22 or 23, wherein the second timing is a start time point of a first one of the *Q* PFs after the first delay.

25. The method according to any one of claims 22-24, wherein determining the target PO from the *Q* PFs after the first delay comprises any one of:
determining the target PO from the *Q* PFs after the first delay according to at least one of an index of the first LP-WUS in the LP-WUS cycle, *Q,* M or *Nₛ*; or
determining a fourth PF from the *Q* PFs after the first delay according to an index of the first LP-WUS in the LP-WUS cycle, *Q* and M, and determining the target PO from the fourth PF according to an identifier of the terminal, *N* and *Nₛ*, wherein for any one of the M LP-WUSs, a PO associated with the any one LP-WUS is one PO in the *Q* PFs, a plurality of POs in the same PF are associated with different LP-WUSs, and one or more terminals configured with the same LP-WUS is(are) associated with the same PO in the *Q* PFs.

26. The method according to any one of claims 22-24, wherein determining the target PO from the *Q* PFs after the first delay comprises any one of:
determining a fifth PF from the *Q* PFs after the first delay according to an index of the first LP-WUS in the LP-WUS cycle, *Q* and M, and determining the target PO from the fifth PF according to an identifier of the terminal, *N* and *Nₛ*; or
determining the target PO from the *Q* PFs after the first delay according to a bit position, in the first LP-WUS, of the wake-up information for instructing the terminal to wake up the MR, and a number of a plurality of paging subgroups comprised in each PO within the paging cycle;
wherein for any one of the M LP-WUSs, a PO associated with the any one LP-WUS belongs to a plurality of POs in one PF among the *Q* PFs, and one or more terminals configured with the same LP-WUS is(are) associated with the same PF among the *Q* PFs.

27. The method according to any one of claims 22-24, wherein determining the target PO from the *Q* PFs after the first delay comprises any one of:
determining an index of a starting PO in the *Q* PFs according to an index of the first LP-WUS in the LP-WUS cycle, *Q,* M and *Nₛ*, and determining the target PO according to the index of the starting PO, *Q* and *Nₛ*; or
determining the target PO from the *Q* PFs according to a bit position, in the first LP-WUS, of the wake-up information for instructing the terminal to wake up the MR, and a number of a plurality of paging subgroups comprised in each PO within the paging cycle;
wherein for any one of the M LP-WUSs, a PO associated with the any one LP-WUS belongs to *x* POs in the *Q* PFs, 1 ≤ *x* ≤ *Q* · *Nₛ*.

28. The method according to any one of claims 22-24, wherein determining the target PO from the *Q* PFs after the first delay comprises any one of:
determining an index of a starting PF among the *Q* PFs according to an index of the first LP-WUS in the LP-WUS cycle, *Q* and M, determining indices of *y* PFs among the *Q* PFs according to the index of the starting PF and *Q,* and determining the target PO from the *y* PFs according to an identifier of the terminal, *N* and *Nₛ*; or
determining the target PO from the *Q* PFs according to a bit position, in the first LP-WUS, of the wake-up information for instructing the terminal to wake up the MR, and a number of a plurality of paging subgroups comprised in each PO within the paging cycle;
wherein for any one of the M LP-WUSs, a PF associated with the any one LP-WUS belongs to the *y* PFs among the *Q* PFs, 1 *≤ y* ≤ *Q.*

29. The method according to any one of claims 4-5, wherein determining the PO that meets the preset condition within the paging cycle as the target PO comprises:
determining the target PO from a first PF group after the first delay,
wherein the M LP-WUSs are associated with the first PF group, the first PF group is a first one of PF groups after the first delay, the paging cycle comprises *N*/*P* PF groups, and each PF group comprises *P* PFs.

30. The method according to claim 29, wherein the first timing is any one of:
an end time point of a last symbol of a channel of a second LP-WUS, wherein the second LP-WUS is a last LP-WUS in an LP-WUS cycle where the first LP-WUS is located;
an end time point of a last time slot of a second LP-WUS;
an end time point of a last sub-frame of a second LP-WUS;
an end time point of a last radio frame of a second LP-WUS; or
an end time point of an LP-WUS cycle where the first LP-WUS is located.

31. The method according to any one of claims 29-30, wherein the second timing is a start time point of a first one of PFs in the first PF group.

32. The method according to any one of claims 29-31, wherein determining the target PO from the first PF group after the first delay comprises any one of:
determining a sixth PF in the first PF group according to *P* and an identifier of the terminal, and determining the target PO from the sixth PF according to *Nₛ*, *N,* and the identifier of the terminal;
determining a seventh PF in the first PF group according to a modulo operation on *P* and an identifier of the terminal, and determining the target PO from the seventh PF according to *Nₛ*, *P* and the identifier of the terminal;
determining the target PO from the *P* PFs in the first PF group according to *P, Nₛ* and an identifier of the terminal;
determining a starting PF among the *P* PFs according to *P* and a number of LP-WUSs comprised in an LP-WUS cycle, and determining the target PO from the starting PF according to *Nₛ*, *N* and an identifier of the terminal; or
determining the target PO from the *P* PFs according to a bit position, in the first LP-WUS, of the wake-up information for instructing the terminal to wake up the MR, and a number of a plurality of paging subgroups comprised in each PO within the paging cycle.

33. The method according to any one of claims 4-5, wherein determining the PO that meets the preset condition within the paging cycle as the target PO comprises:
determining the target PO from a first short cycle,
wherein the paging cycle comprises K short cycles, each short cycle comprises W PFs, W=N/K, the first LP-WUS is associated with a PF or a PO in the first short cycle, and the first short cycle is a first one of short cycles after the first delay.

34. The method according to claim 33, wherein the second timing is any one of:
a start time point of a first symbol of a first PO, wherein the first PO is a first one of POs after the first delay;
a start time point of a first time slot of a first PO;
a start time point of a first sub-frame of a first PO;
a start time point of a first radio frame of a first PO;
a start time point of a first PF, wherein the first PF is a first one of PFs after the first delay;
a start time point of a first symbol of a PEI associated with a first PF;
a start time point of a first time slot of a PEI associated with a first PF;
a start time point of a first sub-frame of a PEI associated with a first PF;
a start time point of a first radio frame of a PEI associated with a first PF;
a start time point of a short paging cycle where a first PO is located; or
a start time point of a short paging cycle where a first PF is located.

35. The method according to claim 33 or 34, wherein determining the target PO from the first short cycle comprises:
determining an index of an eighth PF in the first short cycle according to W and an identifier of the terminal, wherein the eighth PF is a PF associated with the first LP-WUS in the first short cycle; and determining the target PO from the eighth PF; or
determining the target PO in the first short cycle according to W, an identifier of the terminal and*Nₛ*.

36. A paging method, performed by a terminal, comprising:
receiving a first low power wake-up signal (LP-WUS) sent by a network device, wherein the first LP-WUS comprises wake-up information for instructing the terminal to wake up a main radio (MR);
determining a target paging occasion (PO) within a paging cycle based on the first LP-WUS; and
receiving a paging message sent by the network device on the target PO.

37. The method according to claim 36, further comprising:
receiving paging configuration information broadcast by the network device via system broadcasting,
wherein the paging configuration information comprises the paging cycle, and the paging configuration information is used to determine a paging set, the paging set comprises *N* paging frames (PFs) within the paging cycle, and each PF comprises *Nₛ* POs.

38. The method according to claim 37, further comprising:
determining, according to an identifier of the terminal, *N*, the paging cycle, and a radio frame offset, a PF where a legacy PO is located;
determining the legacy PO according to the identifier of the terminal, *N,* and *Nₛ*; and
receiving the paging message sent by the network device on the legacy PO.

39. The method according to claim 37 or 38, wherein determining the target PO within the paging cycle based on the first LP-WUS comprises:
determining a first delay based on the LP-WUS;
determining a first timing, wherein the first timing is associated with the LP-WUS; and
determining a PO that meets a preset condition within the paging cycle as the target PO, wherein the preset condition comprises an interval between a second timing associated with the target PO and the first timing being greater than or equal to the first delay.

40. The method according to claim 39, wherein the first delay comprises at least one of:
a time duration required for the terminal to wake up the MR;
a time duration required for the terminal to complete time-frequency synchronization on the MR;
a time duration between a paging early indication (PEI) configured via the system broadcasting and a PF/PO associated with the PEI; or
a time duration for the terminal to prepare to monitor the paging message.

41. The method according to claim 39, wherein the first timing is any one of:
an end time point of a last symbol of a channel of the first LP-WUS;
an end time point of a last time slot of the first LP-WUS;
an end time point of a last sub-frame of the first LP-WUS;
an end time point of a last radio frame of the first LP-WUS;
an end time point of a last symbol of a channel of a second LP-WUS, wherein the second LP-WUS is a last LP-WUS in an LP-WUS cycle where the first LP-WUS is located;
an end time point of a last time slot of a second LP-WUS;
an end time point of a last sub-frame of a second LP-WUS;
an end time point of a last radio frame of a second LP-WUS; or
an end time point of an LP-WUS cycle where the first LP-WUS is located.

42. The method according to any one of claims 39-41, wherein determining the PO that meets the preset condition within the paging cycle as the target PO comprises:
determining a first PO as the target PO, wherein the first PO is a first one of POs after the first delay.

43. The method according to claim 42, wherein the second timing comprises any one of:
a start time point of a first symbol of the first PO;
a start time point of a first time slot of the first PO;
a start time point of a first sub-frame of the first PO; or
a start time point of a first radio frame of the first PO.

44. The method according to any one of claims 39-41, wherein determining the PO that meets the preset condition within the paging cycle as the target PO comprises:
determining a first PF, wherein the first PF is a first one of PFs after the first delay; and
determining the target PO from the first PF.

45. The method according to claim 44, wherein the second timing is a start time point of the first PF.

46. The method according to claim 44 or 45, wherein determining the target PO from the first PF comprises any one of:
determining the target PO according to a number of POs comprised in the first PF and an identifier of the terminal;
determining a first one of POs in the first PF as the target PO; or
determining the target PO from the first PF according to a bit position, in the first LP-WUS, of the wake-up information for instructing the terminal to wake up the MR.

47. The method according to claim 46, wherein determining the target PO according to the bit position, in the first LP-WUS, of the wake-up information for instructing the terminal to wake up the MR comprises:
determining, according to the bit position and a number of a plurality of paging subgroups comprised in each PO within the paging cycle, a PO where the bit position is located in the first PF; and
determining the PO as the target PO.

48. The method according to any one of claims 39-41, wherein determining the PO that meets the preset condition within the paging cycle as the target PO comprises:
determining a second PO as the target PO, wherein the second PO is one PO among first *n* POs after the first delay, where $2 \leq n \leq \left⌊N⋅{N}_{s}⋅{T}_{lpwus}/T\right⌋$, *T_{lpwus}* is an LP-WUS cycle, *T* is the paging cycle, *N* is a number of PFs comprised in the paging cycle, *Nₛ* is a number of POs comprised in each PF.

49. The method according to claim 48, wherein the second timing is any one of:
a start time point of a first symbol of a first one of the first *n* POs;
a start time point of a first time slot of a first one of the first *n* POs;
a start time point of a first sub-frame of a first one of the first *n* POs; or
a start time point of a first radio frame of a first one of the first *n* POs.

50. The method according to claim 48 or 49, wherein the second PO is any one of:
a first one of the first *n* POs;
a PO determined from the first *n* POs according to *n* and an identifier of the terminal; or
a PO determined from the first *n* POs according to a bit position, in the first LP-WUS, of the wake-up information for instructing the terminal to wake up the MR, and a number of a plurality of paging subgroups comprised in each PO within the paging cycle.

51. The method according to any one of claims 39-41, wherein determining the PO that meets the preset condition within the paging cycle as the target PO comprises:
determining the target PO from first *m* PFs after the first delay, where $2 \leq m \leq \left⌊N⋅{T}_{lpwus}/T\right⌋$ , *T_{lpwus}* is an LP-WUS cycle, *T* is the paging cycle, *N* is a number of PFs comprised in the paging cycle.

52. The method according to claim 51, wherein the second timing is a start time point of a first one of the first *m* PFs.

53. The method according to claim 51 or 52, wherein determining the target PO from the first *m* PFs after the first delay comprises any one of:
determining a second PF, wherein the second PF is a first one of the first *m* PFs after the first delay, or the second PF is a PF determined from the first *m* PFs according to *m* and an identifier of the terminal; and determining the target PO from the second PF according to a number of POs comprised in the second PF, the number of PFs comprised in the paging cycle, and the identifier of the terminal; or
determining, according to the bit position, in the first LP-WUS, of the wake-up information for instructing the terminal to wake up the MR, and a number of a plurality of paging subgroups comprised in each PO within the paging cycle, a PO where the bit position is located in the first *m* PFs as the target PO.

54. The method according to any one of claims 39-41, wherein determining the PO that meets the preset condition within the paging cycle as the target PO comprises:
determining the target PO from a first PF group,
wherein the first LP-WUS is associated with the first PF group, the first PF group is a first one of PF groups after the first delay, the paging cycle comprises *N*/*P* PF groups, and each PF group comprises *P* PFs.

55. The method according to claim 54, wherein the second timing is a start time point of a first one of PFs in the first PF group.

56. The method according to claim 54 or 55, wherein determining the target PO from the first PF group comprises any one of:
determining a third PF, wherein the third PF is a first one of PFs in the first PF group, or the third PF is a PF determined from the first PF group according to *P* and an identifier of the terminal; and determining the target PO from the third PF according to a number of POs comprised in the third PF, a number of PFs comprised in the paging cycle, and the identifier of the terminal; or
determining the target PO from the *P* PFs in the first PF group according to *P,* a number of POs comprised in each PF and the identifier of the terminal.

57. The method according to any one of claims 39-41, wherein determining the PO that meets the preset condition within the paging cycle as the target PO comprises:
determining the target PO from *Q* PFs after the first delay, wherein an LP-WUS cycle where the first LP-WUS is located comprises M LP-WUSs, and the M LP-WUSs are associated with *Q* PFs in the paging set, *Q = N* · *T_{lpwns}*/*T*, where *T_{lpwus}* is the LP-WUS cycle, and *T* is the paging cycle; or
determining the target PO from a first one of PF groups after the first delay, wherein the paging cycle comprises *N*/*Q* PF groups, and each PF group comprises *Q* PFs.

58. The method according to claim 57, wherein the first timing is any one of:
an end time point of a last symbol of a channel of a second LP-WUS, wherein the second LP-WUS is a last LP-WUS in the LP-WUS cycle where the first LP-WUS is located;
an end time point of a last time slot of a second LP-WUS;
an end time point of a last sub-frame of a second LP-WUS;
an end time point of a last radio frame of a second LP-WUS; or
an end time point of the LP-WUS cycle where the first LP-WUS is located.

59. The method according to claim 57 or 58, wherein the second timing is a start time point of a first one of the *Q* PFs after the first delay.

60. The method according to any one of claims 57-59, wherein determining the target PO from the *Q* PFs after the first delay comprises any one of:
determining the target PO from the *Q* PFs after the first delay according to at least one of an index of the first LP-WUS in the LP-WUS cycle, *Q,* M or *Nₛ*; or
determining a fourth PF from the *Q* PFs after the first delay according to an index of the first LP-WUS in the LP-WUS cycle, *Q* and M, and determining the target PO from the fourth PF according to an identifier of the terminal, *N* and *Nₛ*, wherein for any one of the M LP-WUSs, a PO associated with the any one LP-WUS is one PO in the *Q* PFs, a plurality of POs in the same PF are associated with different LP-WUSs, and one or more terminals configured with the same LP-WUS is(are) associated with the same PO in the *Q* PFs.

61. The method according to any one of claims 57-59, wherein determining the target PO from the *Q* PFs after the first delay comprises any one of:
determining a fifth PF from the *Q* PFs after the first delay according to an index of the first LP-WUS in the LP-WUS cycle, *Q* and M, and determining the target PO from the fifth PF according to an identifier of the terminal, *N* and *Nₛ*; or
determining the target PO from the *Q* PFs after the first delay according to a bit position, in the first LP-WUS, of the wake-up information for instructing the terminal to wake up the MR, and a number of a plurality of paging subgroups comprised in each PO within the paging cycle,
wherein for any one of the M LP-WUSs, a PO associated with the any one LP-WUS belongs to a plurality of POs in one PF among the *Q* PFs, and one or more terminals configured with the same LP-WUS is(are) associated with the same PF among the *Q* PFs.

62. The method according to any one of claims 57-59, wherein determining the target PO from the *Q* PFs after the first delay comprises any one of:
determining an index of a starting PO in the *Q* PFs according to an index of the first LP-WUS in the LP-WUS cycle, *Q,* M and *Nₛ*, and determining the target PO according to the index of the starting PO, *Q* and *Nₛ*; or
determining the target PO from the Q PFs according to a bit position, in the first LP-WUS, of the wake-up information for instructing the terminal to wake up the MR, and a number of a plurality of paging subgroups comprised in each PO within the paging cycle;
wherein for any one of the M LP-WUSs, a PO associated with the any one LP-WUS belongs to *x* POs in the *Q* PFs, 1 ≤ *x* ≤ *Q* · *Nₛ*.

63. The method according to any one of claims 57-59, wherein determining the target PO from the *Q* PFs after the first delay comprises any one of:
determining an index of a starting PF among the *Q* PFs according to an index of the first LP-WUS in the LP-WUS cycle, *Q* and M, determining indices of *y* PFs among the *Q* PFs according to the index of the starting PF and *Q,* and determining the target PO from the *y* PFs according to an identifier of the terminal, *N* and *Nₛ*; or
determining the target PO from the *Q* PFs according to a bit position, in the first LP-WUS, of the wake-up information for instructing the terminal to wake up the MR, and a number of a plurality of paging subgroups comprised in each PO within the paging cycle;
wherein for any one of the M LP-WUSs, a PF associated with the any one LP-WUS belongs to the *y* PFs among the *Q* PFs, 1 ≤ *y* ≤ *Q.*

64. The method according to any one of claims 39-41, wherein determining the PO that meets the preset condition within the paging cycle as the target PO comprises:
determining the target PO from a first PF group after the first delay,
wherein the M LP-WUSs are associated with the first PF group, the first PF group is a first one of PF groups after the first delay, the paging cycle comprises *N*/*P* PF groups, and each PF group comprises *P* PFs.

65. The method according to claim 64, wherein the first timing is any one of:
an end time point of a last symbol of a channel of a second LP-WUS, wherein the second LP-WUS is a last LP-WUS in an LP-WUS cycle where the first LP-WUS is located;
an end time point of a last time slot of a second LP-WUS;
an end time point of a last sub-frame of a second LP-WUS;
an end time point of a last radio frame of a second LP-WUS; or
an end time point of an LP-WUS cycle where the first LP-WUS is located.

66. The method according to any one of claims 64-65, wherein the second timing is a start time point of a first one of PFs in the first PF group.

67. The method according to any one of claims 64-66, wherein determining the target PO from the first PF group after the first delay comprises any one of:
determining a sixth PF in the first PF group according to *P* and an identifier of the terminal, and determining the target PO from the sixth PF according to *Nₛ*, *N,* and the identifier of the terminal;
determining a seventh PF in the first PF group according to a modulo operation on *P* and an identifier of the terminal, and determining the target PO from the seventh PF according to *Nₛ*, *P* and the identifier of the terminal;
determining the target PO from the *P* PFs in the first PF group according to *P, Nₛ* and an identifier of the terminal;
determining a starting PF among the *P* PFs according to *P* and a number of LP-WUSs comprised in an LP-WUS cycle, and determining the target PO from the starting PF according to *Nₛ*, *N* and an identifier of the terminal; or
determining the target PO from the *P* PFs according to a bit position, in the first LP-WUS, of the wake-up information for instructing the terminal to wake up the MR, and a number of a plurality of paging subgroups comprised in each PO within the paging cycle.

68. The method according to any one of claims 39-41, wherein determining the PO that meets the preset condition within the paging cycle as the target PO comprises:
determining the target PO from a first short cycle,
wherein the paging cycle comprises K short cycles, each short cycle comprises W PFs, W=N/K, the first LP-WUS is associated with a PF or a PO in the first short cycle, and the first short cycle is a first one of short cycles after the first delay.

69. The method according to claim 68, wherein the second timing is any one of:
a start time point of a first symbol of a first PO, wherein the first PO is a first one of POs after the first delay;
a start time point of a first time slot of a first PO;
a start time point of a first sub-frame of a first PO;
a start time point of a first radio frame of a first PO;
a start time point of a first PF, wherein the first PF is a first one of PFs after the first delay;
a start time point of a first symbol of a PEI associated with a first PF;
a start time point of a first time slot of a PEI associated with a first PF;
a start time point of a first sub-frame of a PEI associated with a first PF;
a start time point of a first radio frame of a PEI associated with a first PF;
a start time point of a short paging cycle where a first PO is located; or
a start time point of a short paging cycle where a first PF is located.

70. The method according to claim 68 or 69, wherein determining the target PO from the first short cycle comprises:
determining an index of an eighth PF in the first short cycle according to W and an identifier of the terminal, wherein the eighth PF is a PF associated with the first LP-WUS in the first short cycle; and determining the target PO from the eighth PF; or
determining the target PO in the first short cycle according to W, an identifier of the terminal and*Nₛ*.

71. A network device, comprising a transceiver module and a processing module; wherein
the transceiver module is configured to send a first low power wake-up signal (LP-WUS) to a terminal, wherein the first LP-WUS comprises wake-up information for instructing the terminal to wake up a main radio (MR);
the processing module is configured to determine a target paging occasion (PO) within a paging cycle based on the first LP-WUS; and
the transceiver module is configured to send a paging message to the terminal on the target PO.

72. A terminal, comprising a transceiver module and a processing module; wherein
the transceiver module is configured to receive a first low power wake-up signal (LP-WUS) sent by a network device, wherein the first LP-WUS comprises wake-up information for instructing the terminal to wake up a main radio (MR);
the processing module is configured to determine a target paging occasion (PO) within a paging cycle based on the first LP-WUS; and
the transceiver module is configured to receive a paging message sent by the network device on the target PO.

73. A communication device, comprising:
one or more processors;
wherein the one or more processors are configured to call instructions to cause the communication device to perform the method according to any one of claims 1 to 70.

74. A communication system, comprising a network device and a terminal, wherein the network device is configured to perform the method according to any one of claims 1 to 35, and the terminal is configured to perform the method according to any one of claims 36 to 70.

75. A storage medium having instructions stored thereon, wherein when the instructions are executed on a communication device, the communication device is caused to perform the 7 method according to any one of claims 1 to 70.
